# EUROPEAN PATENT APPLICATION

(11) **EP 4 239 955 A1**
(43) Date of publication of application: **06.09.2023**
(21) Application number: 21900023.9
(22) Date of filing: 01.12.2021
(51) Int. Cl.: H04L 12/18

(54) **CALL METHOD AND ELECTRONIC DEVICE**

(30) Priority: 01.12.2020 CN 202011400206
(71) Applicant: Huawei Technologies Co., Ltd., Shenzhen, Guangdong 518129 (CN)
(72) Inventor: ZHANG, Xin, Shenzhen, Guangdong 518129 (CN)
(74) Representative: Isarpatent
(86) International application number: PCT/CN2021/134764
(87) International publication number: WO 2022/116992

(57) **Abstract**

Embodiments of this application disclose a call method and an electronic device, and relate to the field of terminal technologies. Distributed devices participating in a call process divide and register respective capabilities. In the call process, a device corresponding to a most applicable capability can be selected based on the registered capabilities to process a call service. This improves use experience of a user. The method includes: A first device establishes a communication connection to at least one second device, and receives capability registration information of each second device. When receiving a call service, the first device can select, based on capability information of the first device and the capability registration information of the second device, a target device having a capability of processing the call service to process the call service; and receive feedback information.

## Description

This application claims priority to Chinese Patent Application No. 202011400206.5, filed with the China National Intellectual Property Administration on December 1, 2020 and entitled "CALL METHOD AND ELECTRONIC DEVICE", which is incorporated herein by reference in its entirety.

### TECHNICAL FIELD

Embodiments of this application relate to the field of terminal technologies, and in particular, to a call method and an electronic device.

### BACKGROUND

In a distributed system, a plurality of electronic devices can implement cooperative working. For example, by using a wireless communication technology, an electronic device (for example, a mobile phone or a tablet computer) can collect and play audio data by using a wearable device such as a Bluetooth headset. This facilitates a user operation. For another example, by using a projection technology, an electronic device sends, by using a wireless communication technology, content displayed on a local display to a large-screen device for display, to facilitate viewing by a user.

However, in the foregoing two scenarios, only single audio data or video data transmission can be performed between electronic devices to implement cooperative working. As a result, this case is not applicable to a scenario in which audio data and video data are synchronously transmitted in real time in a current video call process. In addition, electronic devices that work cooperatively can be selected only according to a fixed rule, and stability of a wireless connection is ignored. Consequently, user experience of the user is affected.

### SUMMARY

According to a call method and an electronic device that are provided in embodiments of this application, distributed devices participating in a call process divide and register respective capabilities. In the call process, a device corresponding to a most applicable capability can be selected based on the registered capabilities to process a call service. This improves use experience of a user.

To achieve the foregoing objective, the following technical solutions are used in embodiments of this application.

According to a first aspect, an embodiment of this application provides a call method, applied to a first electronic device. The method may include: establishing a communication connection to at least one second device; receiving capability registration information of the at least one second device; receiving a first call service request; selecting, based on capability information of the first device and the capability registration information of the at least one second device, a first target device configured to process the first call service request, where the first target device is the first device or one of the at least one second device; sending the first call service request to the first target device; and receiving first feedback information obtained after the first target device processes the first call service request.

The first device can receive capability registration information of a second device, and the registration information includes, for example, a function that can be implemented by the second device in a call process. For example, the second device is a mobile phone, a mobile communication module in the mobile phone can implement a network function of making a call, and an audio module in the mobile phone can implement a voice playing function of playing audio. In this case, the mobile phone may register, with the first device, the mobile communication module that implements the network function and the audio module that implements the voice playing function. In this way, when receiving a call service subsequently, the first device can schedule a device corresponding to a corresponding module to implement the call service. For example, the first device selects the audio module in the mobile phone to play audio.

In this way, in a distributed call system, each device may register a capability of the device, and set the first device configured to receive registration information. In this way, when a call service needs to be processed, the first device can select, based on a registered capability, a device that is most suitable for processing the current call service. In this way, the call service is flexibly processed, and use experience of a user is improved.

In a possible implementation, the selecting, based on capability information of the first device and the capability registration information of the at least one second device, a first target device configured to process the first call service request includes: grouping a capability of the first device and a capability of the second device by a function category based on the capability information of the first device and the capability registration information of the at least one second device, and setting an evaluation indicator corresponding to each group and a weight corresponding to each evaluation indicator; and selecting a first group used to process the first call service request, performing scoring on a capability of the first device and/or a capability of the second device in the first group by using an evaluation indicator and a weight corresponding to the evaluation indicator, and selecting the first target device, where a score of a capability of the first target device in the first group is a highest score.

For example, a capability of a device is implemented by using a functional module in the device. Based on different capabilities, the device may be divided into devices including different components. Based on functions that can be implemented by different capabilities, the capabilities are grouped, that is, components are grouped. Based on functions implemented by different types of components in a call process and factors that affect working of the components, corresponding indicators and indicator weights are pre-configured for the different types of components to evaluate each of components of a same type, to obtain an optimal component therein. For example, a call controller performs scoring on each of components of a same type based on indicators and corresponding weights, sorts obtained scores, and uses a component with a highest score as an optimal component. The call controller sequentially determines optimal components in various types of components in a call process implementation order to obtain a group of optimal components, so that a better call service processing result can be obtained.

In a possible implementation, after the receiving first feedback information obtained after the first target device processes the first call service request, the method further includes: determining a second call service request based on the first feedback information, where the second call service request is different from the first call service request; selecting, based on the capability information of the first device and the capability registration information of the at least one second device, a second target device configured to process the second call service request, where the second target device is the first device or one of the at least one second device; sending the second call service request to the second target device; and receiving second feedback information obtained after the second target device processes the second call service request.

For example, it is assumed that the first call service request is a number parsing request and the first target device includes a number parsing component. After processing the number parsing request by using the number parsing component, the first target device sends a parsing result to the first device. To be specific, the first feedback information is the number parsing result. Then, if the first device determines, based on the number parsing result, that the second call service request is a number dialing request, the first device sends the number dialing request to the selected second target device having a number dialing capability. To be specific, the second target device includes a target network component, and can perform number dialing.

In a possible implementation, the first target device and the second target device are different second devices, and the first target device is configured to directly receive call data sent by the second target device.

For example, it is assumed that the first target device includes a target network component and the second target device includes a target user interaction component. If a condition for direct communication between the target user interaction component and the target network component is met, a direct communication channel is established between the target user interaction component and the target network component. In a subsequent call process, call data can be directly transmitted between the target user interaction component and the target network component, without requiring the first device to perform data relaying. This reduces cross-device transmission of the call data and improves call efficiency. The call data includes, for example, audio data, video data, and a control command.

In a possible implementation, after the receiving a first call service request, the method further includes: selecting, based on the first call service request, the first target device associated with the first call service request.

In some embodiments, a subscription relationship may be established between different types of components (that is, capabilities) to form a component combination. Establishing a subscription relationship between components is establishing a static association relationship between the components. After selecting a component from the component combination, the call controller directly determines, based on the subscription relationship, to select another component from the component combination, with no need to perform a scoring process of a component of a corresponding component type. Alternatively, after scoring is performed on components based on the foregoing indicators, weights for selecting the components having the subscription relationship are increased based on the subscription relationship, and scoring is performed again. In other words, a finally selected component is determined after scoring is performed twice based on the indicators and the subscription relationship.

The components having the subscription relationship may be located in a same electronic device, or may be located in different electronic devices. For example, if the electronic device receives number information input by a user, the electronic device is also used to play call voice data for the user, so that better use experience can be provided for the user. Therefore, a subscription relationship may be established between an input component and a user interaction component in the electronic device. In this case, subsequently, when the input component is selected, during selection of the user interaction component, it can be directly determined, based on the subscription relationship, to select the user interaction component.

In a possible implementation, a device form of the first device is different from that of at least one of the at least one second device.

For example, devices in different device forms form a distributed call system, so that a corresponding device is scheduled based on a capability to perform a call process.

In a possible implementation, there are one or more pieces of capability information of the first device, and there are one or more pieces of capability registration information of one second device.

For example, a device may have one or more capabilities, and a device corresponding to a required capability is selected based on a call service request, to implement flexible device scheduling. In addition, device scheduling is performed based on a capability, so that a direct connection channel can be established between devices that originally do not sense each other. This improves call efficiency.

In a possible implementation, the first call service request is any one of a number parsing request, a number dialing request, a video play and/or capture request, and an audio play and/or capture request.

For example, a call scenario includes, for example, a voice call scenario, a video call scenario, a carrier number dialing scenario, and a virtual number dialing scenario. Therefore, different call services need to be processed based on different call scenarios.

In a possible implementation, the first target device is the first device, and the sending the first call service request to the first target device, and receiving first feedback information obtained after the first target device processes the first call service request includes: sending, by a first module in the first target device, the first call service request to a second module in the first target device; and receiving, by the first module, the first feedback information obtained after the second module processes the first call service request.

In a possible implementation, the first target device is a target second device in the at least one second device, and the sending the first call service request to the first target device, and receiving first feedback information obtained after the first target device processes the first call service request includes: sending, by the first device, the first call service request to the target second device; and receiving, by the first device, the first feedback information obtained after the target second device processes the first call service request.

For example, a target component determined by the first device based on a call service request, the capability information of the first device, and capability registration information of a second device may be located in the first device (that is, the first device), or may be located in the second device. In this case, if the target component is located in the first device, a call service processing process is interaction between components in the first device. If the target component is located in a target second device, the first device sends the call service request to the target second device for processing.

According to a second aspect, an embodiment of this application provides an electronic device, including a processor and a memory. The memory is coupled to the processor, the memory is configured to store computer program code, and the computer program code includes computer instructions. When the processor reads the computer instructions from the memory, the electronic device is enabled to perform the following operations: establishing a communication connection to at least one second device; receiving capability registration information of the at least one second device; receiving a first call service request; selecting, based on capability information of the electronic device and the capability registration information of the at least one second device, a first target device configured to process the first call service request, where the first target device is the electronic device or one of the at least one second device; sending the first call service request to the first target device; and receiving first feedback information obtained after the first target device processes the first call service request.

In a possible implementation, the selecting, based on capability information of the electronic device and the capability registration information of the at least one second device, a first target device configured to process the first call service request includes: grouping a capability of the electronic device and a capability of the second device by a function category based on the capability information of the electronic device and the capability registration information of the at least one second device, and setting an evaluation indicator corresponding to each group and a weight corresponding to each evaluation indicator; and selecting a first group used to process the first call service request, performing scoring on a capability of the electronic device and/or a capability of the second device in the first group by using an evaluation indicator and a weight corresponding to the evaluation indicator, and selecting the first target device, where a score of a capability of the first target device in the first group is a highest score.

In a possible implementation, when the processor reads the computer instructions from the memory, the electronic device is enabled to further perform the following operations: determining a second call service request based on the first feedback information, where the second call service request is different from the first call service request; selecting, based on capability information of the electronic device and the capability registration information of the at least one second device, a second target device configured to process the second call service request, where the second target device is the electronic device or one of the at least one second device; sending the second call service request to the second target device; and receiving second feedback information obtained after the second target device processes the second call service request.

In a possible implementation, the first target device and the second target device are different second devices, and the first target device is configured to directly receive call data sent by the second target device.

In a possible implementation, when the processor reads the computer instructions from the memory, the electronic device is enabled to further perform the following operation: selecting, based on the first call service request, the first target device associated with the first call service request.

In a possible implementation, a device form of the electronic device is different from that of at least one of the at least one second device.

In a possible implementation, there are one or more pieces of capability information of the electronic device, and there are one or more pieces of capability registration information of one second device.

In a possible implementation, the first call service request is any one of a number parsing request, a number dialing request, a video play and/or capture request, and an audio play and/or capture request.

In a possible implementation, the first target device is the electronic device, and the sending the first call service request to the first target device, and receiving first feedback information obtained after the first target device processes the first call service request includes: sending, by a first module in the first target device, the first call service request to a second module in the first target device; and receiving, by the first module, the first feedback information obtained after the second module processes the first call service request.

In a possible implementation, the first target device is a target second device in the at least one second device, and the sending the first call service request to the first target device, and receiving first feedback information obtained after the first target device processes the first call service request includes: sending the first call service request to the target second device; and receiving the first feedback information obtained after the target second device processes the first call service request.

In addition, for technical effects of the electronic device in the second aspect, refer to the technical effects of the call method in the first aspect. Details are not described herein again.

According to a third aspect, an embodiment of this application provides an electronic device, including a processing module, a receiving module, and a sending module. The processing module is configured to establish a communication connection to at least one second device. The receiving module is configured to receive capability registration information of the at least one second device. The receiving module is further configured to receive a first call service request. The processing module is further configured to select, based on capability information of the electronic device and the capability registration information of the at least one second device, a first target device configured to process the first call service request, where the first target device is the electronic device or one of the at least one second device. The sending module is configured to send the first call service request to the first target device. The receiving module is further configured to receive first feedback information obtained after the first target device processes the first call service request.

In a possible implementation, the processing module is specifically configured to: group a capability of the electronic device and a capability of the second device by a function category based on the capability information of the electronic device and the capability registration information of the at least one second device, and set an evaluation indicator corresponding to each group and a weight corresponding to each evaluation indicator; and select a first group used to process the first call service request, perform scoring on a capability of the electronic device and/or a capability of the second device in the first group by using an evaluation indicator and a weight corresponding to the evaluation indicator, and select the first target device, where a score of a capability of the first target device in the first group is a highest score.

In a possible implementation, the processing module is further configured to: determine a second call service request based on the first feedback information, where the second call service request is different from the first call service request; and select, based on capability information of the electronic device and the capability registration information of the at least one second device, a second target device configured to process the second call service request, where the second target device is the electronic device or one of the at least one second device. The sending module is further configured to send the second call service request to the second target device. The receiving module is further configured to receive second feedback information obtained after the second target device processes the second call service request.

In a possible implementation, the first target device and the second target device are different second devices, and the first target device is configured to directly receive call data sent by the second target device.

In a possible implementation, the processing module is further configured to select, based on the first call service request, the first target device associated with the first call service request.

In a possible implementation, a device form of the electronic device is different from that of at least one of the at least one second device.

In a possible implementation, there are one or more pieces of capability information of the electronic device, and there are one or more pieces of capability registration information of one second device.

In a possible implementation, the first call service request is any one of a number parsing request, a number dialing request, a video play and/or capture request, and an audio play and/or capture request.

In a possible implementation, the first target device is a target second device in the at least one second device. The sending module is specifically configured to send the first call service request to the target second device. The receiving module is specifically configured to receive the first feedback information obtained after the target second device processes the first call service request.

Optionally, the receiving module and the sending module may be collectively referred to as a transceiver module, may be implemented by a transceiver or a transceiver-related circuit component, and may be a transceiver or a transceiver unit.

In addition, for technical effects of the electronic device in the third aspect, refer to the technical effects of the call method in the first aspect. Details are not described herein again.

According to a fourth aspect, an embodiment of this application provides an electronic device. The electronic device has a function of implementing the call method according to any one of the first aspect and the possible implementations of the first aspect. The function may be implemented by hardware, or may be implemented by hardware executing corresponding software. The hardware or the software includes one or more modules corresponding to the foregoing function.

According to a fifth aspect, an embodiment of this application provides a computer-readable storage medium, including computer instructions. When the computer instructions are run on an electronic device, the electronic device is enabled to perform the call method according to any one of the first aspect and the possible implementations of the first aspect.

According to a sixth aspect, an embodiment of this application provides a computer program product. When the computer program product runs on an electronic device, the electronic device is enabled to perform the call method according to any one of the first aspect and the possible implementations of the first aspect.

According to a seventh aspect, a circuit system is provided. The circuit system includes a processing circuit, and the processing circuit is configured to perform the call method according to any one of the first aspect and the possible implementations of the first aspect.

According to an eighth aspect, an embodiment of this application provides a chip system, including at least one processor and at least one interface circuit. The at least one interface circuit is configured to: perform receiving and sending functions and send instructions to the at least one processor. When the at least one processor executes the instructions, the at least one processor performs the call method according to any one of the first aspect and the possible implementations of the first aspect.

### BRIEF DESCRIPTION OF DRAWINGS

FIG. 1 is a schematic diagram of a communication system according to an embodiment of this application;
FIG. 2 is a schematic diagram of a structure of an electronic device according to an embodiment of this application;
FIG. 3 is a schematic diagram 1 of an interface according to an embodiment of this application;
FIG. 4 is a schematic diagram 2 of an interface according to an embodiment of this application;
FIG. 5 is a schematic diagram 3 of an interface according to an embodiment of this application;
FIG. 6 is a schematic diagram 1 of a call scenario according to an embodiment of this application;
FIG. 7 is a schematic diagram of a block diagram of a software structure of an electronic device according to an embodiment of this application;
FIG. 8 is a schematic diagram of a structure of a call controller according to an embodiment of this application;
FIG. 9A and FIG. 9B are a flowchart 1 of a call method according to an embodiment of this application;
FIG. 10A and FIG. 10B are a flowchart 2 of a call method according to an embodiment of this application;
FIG. 11 is a schematic diagram 4 of an interface according to an embodiment of this application;
FIG. 12 is a flowchart 3 of a call method according to an embodiment of this application;
FIG. 13 is a schematic diagram 5 of an interface according to an embodiment of this application;
FIG. 14 is a schematic diagram 2 of a call scenario according to an embodiment of this application;
FIG. 15 is a schematic diagram 3 of a call scenario according to an embodiment of this application;
FIG. 16 is a schematic diagram 4 of a call scenario according to an embodiment of this application;
FIG. 17 is a flowchart 4 of a call method according to an embodiment of this application;
FIG. 18 is a schematic diagram 5 of a call scenario according to an embodiment of this application;
FIG. 19 is a schematic diagram 6 of an interface according to an embodiment of this application; and
FIG. 20 is a schematic diagram of a structure of a call apparatus according to an embodiment of this application.

### DESCRIPTION OF EMBODIMENTS

With reference to the accompanying drawings, the following describes in detail a call method and an electronic device provided in embodiments of this application.

The terms "include", "contain", and any other variants thereof mentioned in descriptions of embodiments of this application mean to cover the non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the term such as "example" or "for example" is used to represent giving an example, an illustration, or descriptions. Any embodiment or design scheme described as "example" or "for example" in embodiments of this application should not be explained as being more preferred or having more advantages than another embodiment or design scheme. Exactly, use of the word such as "example" or "for example" is intended to present a relative concept in a specific manner.

In the description of the embodiments of this application, unless otherwise stated, "a plurality of means two or more. "And/or" in this specification describes only an association relationship for describing associated objects and represents that there may be three relationships. For example, A and/or B may represent the following three cases: Only A exists, both A and B exist, and only B exists.

First, for ease of understanding, the following first describes related terms and concepts that may be used in embodiments of this application.

### (1) Call process

The call process is a process in which two-party users of a call use electronic devices to exchange bidirectional voice streams and video streams. The call process may be a point-to-point call process. For example, the two-party users of the call perform the call process by using walkie-talkies. For the call process, another device may alternatively be used to perform relaying to complete the call. For example, a subscriber identity module (subscriber identification module, SIM) card is installed in an electronic device, and a call process is performed by using a SIM through a carrier network. For another example, an instant messaging application (for example, WeChat or Skype) is installed in an electronic device, and a call process is performed by using the instant messaging application.

### (2) Baseband processor

The baseband processor may also be described as a baseband chip, and is configured to synthesize a baseband signal to be transmitted, or decode a received baseband signal. The baseband chip requires support of the carrier network. For example, a 5G baseband chip is installed in a mobile phone, and can support 5G communication. In a communication process, the mobile phone can reach a 5G bandwidth only when being supported by a 5G carrier network.

Further, the baseband processor is responsible for sending and receiving bidirectional data. The data may include data such as audio, a video, a text, a picture, and streaming media, and may alternatively include control signaling for controlling a call process.

In some embodiments, a network module (for example, a baseband processor) that is in an electronic device and that is configured to communicate with another electronic device may be described as a network component. In a call process, the network component may be directly connected to a peer electronic device. For example, the peer electronic device is a small walkie-talkie. Alternatively, the network component may communicate with a peer electronic device after relaying is performed by using a relay device. For example, the relay device is a carrier base station or an instant messaging application server.

### (3) Distributed call system

The distributed system (distributed system) refers to an entirety formed by combining a plurality of electronic devices. In the distributed system, a task may be assigned to electronic devices in the distributed system for cooperative implementation. Correspondingly, in the distributed call system, at least two electronic devices jointly perform a call task after being connected to each other in a wireless connection or wired connection manner.

It should be noted that a device in the distributed call system may be referred to as a distributed call device. The distributed call system is in a distributed environment, and the distributed environment may be a local area network or a wide area network. This is not limited in embodiments of this application.

### (4) Component

The component (component) is a simple encapsulation of data and a method. The component has a specific attribute and a specific method. The attribute is a simple visitor of component data, and the method is a function of the component.

For example, an electronic device may be divided in a component dimension based on a function implemented by the electronic device in a call process. For example, a mobile phone has a capability of processing audio data. For example, the mobile phone includes an audio component configured to process audio data, for example, a microphone or a speaker. A television has a capability of displaying a video image. For example, the television includes a video component configured to display a video image, for example, a display or a camera.

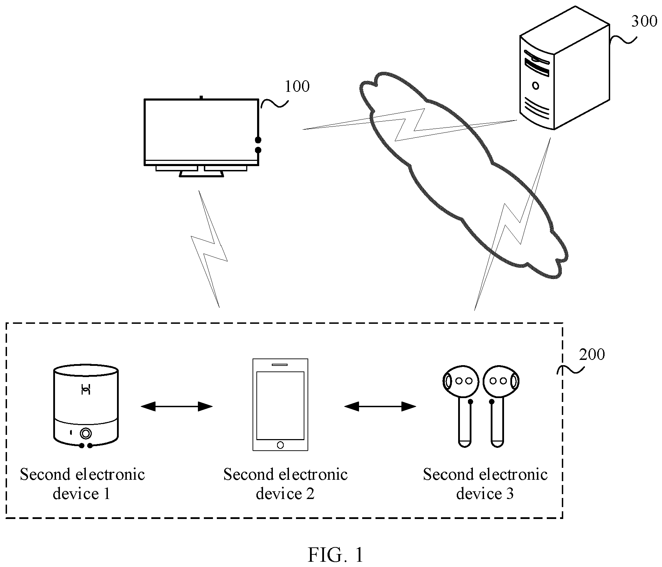

FIG. 1 is a schematic diagram of a communication system to which a call method is applied according to an embodiment of this application. As shown in FIG. 1, the communication system includes a first electronic device 100 and at least one second electronic device 200 (for example, a second electronic device 1, a second electronic device 2, and a second electronic device 3). The communication system may also be described as a distributed system, a distributed communication system, a distributed call system, or the like. Based on the system, the first electronic device 100 and the second electronic device 200 cooperate with each other to complete a common task, for example, a call task.

In the communication system, the first electronic device 100 and the second electronic device 200 may be connected to each other through a wired network or a wireless network. For example, the first electronic device 100 may establish a short-range wireless communication connection to each of the one or more second electronic devices 200, to implement a function of communication between the first electronic device 100 and the second electronic device 200. For example, the first electronic device 100 may establish a communication connection such as a Bluetooth connection, a wireless fidelity (wireless fidelity, Wi-Fi) connection, a ZigBee (ZigBee) connection, or a near field communication (near field communication, NFC) connection to the second electronic device 200. For another example, the first electronic device 100 may alternatively establish a communication connection to the second electronic device 200 through cellular network interconnection or by using a transit device (for example, a USB data cable or a dock device). A manner of connection between devices is not specifically limited in embodiments of this application.

Optionally, the first electronic device 100 is a primary device in the communication system, and is provided with a central controller, for example, a call controller. The first electronic device 100 is configured to: receive registration of each component that is in a distributed call system and that is used for a call, and control the component to participate in a call process. The component used for a call includes, for example, a sound playing component, a sound acquisition component, a display component, and a network component.

For example, the first electronic device 100 includes a terminal device such as a large-screen display device (for example, a smart screen), a mobile phone, a tablet computer (Pad), a personal computer (personal computer, PC), a notebook computer, a desktop computer, a vehicle-mounted device, a wearable device, an ultra-mobile personal computer (ultra-mobile personal computer, UMPC), a netbook, a personal digital assistant (personal digital assistant, PDA), a wireless terminal in industrial control (industrial control), a wireless terminal in self driving (self driving), a wireless terminal in remote medical (remote medical) application, a wireless terminal in a smart grid (smart grid), a wireless terminal in transport safety (transportation safety), a wireless terminal in a smart city (smart city), a wireless terminal in a smart home (smart home), or an artificial intelligence (artificial intelligence) device. A specific type of the first electronic device 100 is not limited in embodiments of this application.

Optionally, the second electronic device 200 is a secondary device in the communication system, and includes a component used for a call. Further, the component that is in the second electronic device 200 and that is used for a call can directly perform data transmission with a component in the first electronic device 100 and/or a component in another second electronic device 200, to complete a call task.

For example, the second electronic device 200 includes a terminal device such as a mobile phone, a large-screen display device (for example, a smart screen), a tablet computer (Pad), a personal computer (personal computer, PC), a notebook computer, a desktop computer, a vehicle-mounted device, a wearable device (for example, a Bluetooth headset or a smartwatch), an acoustic device, a virtual reality (virtual reality, VR) terminal device, an augmented reality (augmented reality, AR) terminal device, an ultra-mobile personal computer (ultra-mobile personal computer, UMPC), a netbook, a personal digital assistant (personal digital assistant, PDA), a wireless terminal in industrial control (industrial control), a wireless terminal in self driving (self driving), a wireless terminal in remote medical (remote medical) application, a wireless terminal in a smart grid (smart grid), a wireless terminal in transport safety (transportation safety), a wireless terminal in a smart city (smart city), a wireless terminal in a smart home (smart home), or an artificial intelligence (artificial intelligence) device. A specific type of the second electronic device 200 is not limited in embodiments of this application.

In some embodiments, the first electronic device 100 and the second electronic device 200 may also be referred to as distributed call devices, and are configured to participate in a call process to provide call experience for a user.

Optionally, as shown in FIG. 1, the communication system may further include a server 300. The server 300 is configured to provide a carrier network (for example, a mobile network, a telecommunication network, or a Unicom network), and the first electronic device 100 or the second electronic device 200 uses the server 300 to make a call through the carrier network. In this embodiment of this application, that an electronic device makes a call through the carrier network may also be described as that the electronic device dials a carrier number, that the electronic device makes a call by using a telephone application, or the like. Details are not described below.

For example, the server 300 may be a device or a server with a computing function, for example, a cloud server or a network server. The server 300 may be one server, a server cluster including a plurality of servers, or a cloud computing service center.

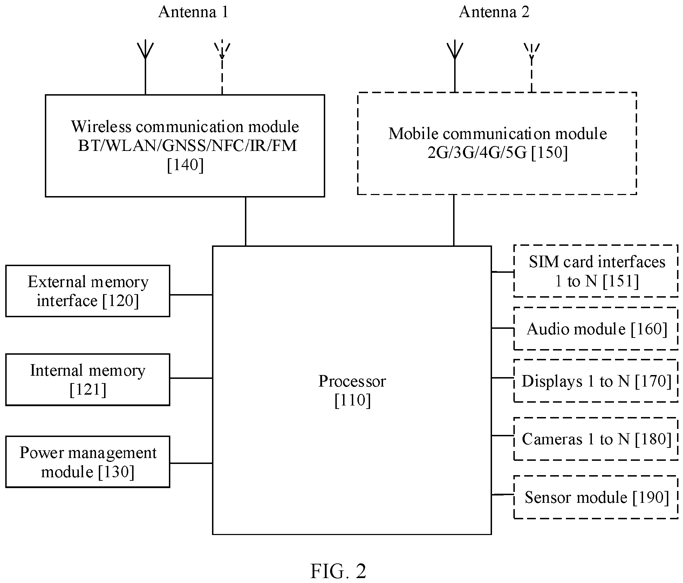

For example, FIG. 2 is a schematic diagram of a structure of an electronic device. The electronic device may be the first electronic device 100 and/or the second electronic device 200. The electronic device may include a processor 110, an external memory interface 120, an internal memory 121, a power management module 130, an antenna 1, and a wireless communication module 140.

It may be understood that, the structure described in this embodiment of this application does not constitute a specific limitation on the electronic device. In other embodiments of this application, the electronic device may include more or fewer components than those shown in the figure, a combination of some components, splitting of some components, or a different arrangement of the components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache memory. The memory may store instructions or data that the processor 110 has just used or used repeatedly. If the processor 110 needs to use the instructions or the data again, the processor 110 may directly invoke the instructions or the data from the memory. This avoids repeated access, reduces waiting time of the processor 110, and improves system efficiency.

The external memory interface 120 may be configured to connect to an external storage card, for example, a micro SD card, to extend a storage capability of the electronic device. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice play function and an image play function), and the like. The data storage area may store data (for example, audio data and a phone book) created during use of the electronic device, and the like. In addition, the internal memory 121 may include a high-speed random access memory, and may further include a nonvolatile memory, for example, at least one magnetic disk storage device, a flash storage device, a universal flash storage (universal flash storage, LTFS), and the like. The processor 110 runs the instructions stored in the internal memory 121 and/or the instructions stored in the memory disposed in the processor, to execute various function applications of the electronic device and data processing.

The power management module 130 is configured to connect to a battery, a charging management module, and the processor 110. The power management module 130 receives an input from the battery and/or the charging management module to supply power to the processor 110, the internal memory 121, the wireless communication module 140, and the like. The charging management module is configured to receive a charging input from a charger. The charger may be a wireless charger or a wired charger. The charging management module may also supply power to the electronic device through the power management module 130 while charging the battery. In some other embodiments, the power management module 130 and the charging management module may alternatively be disposed in a same component.

The wireless communication module 140 may provide wireless communication solutions that are applied to the electronic device and that include wireless local area network (wireless local area network, WLAN) (for example, wireless fidelity (wireless fidelity, Wi-Fi) network), Bluetooth (Bluetooth, BT), global navigation satellite system (global navigation satellite system, GNSS), frequency modulation (frequency modulation, FM), near field communication (near field communication, NFC), an infrared (infrared, IR) technology, and the like. The wireless communication module 140 may be one or more components integrating at least one communication processing module. The wireless communication module 140 receives an electromagnetic wave through the antenna 1, performs frequency modulation and filtering processing on the electromagnetic wave signal, and sends a processed signal to the processor 110. The wireless communication module 140 may further receive a to-be-sent signal from the processor 110, perform frequency modulation and amplification on the signal, and convert the signal into an electromagnetic wave for radiation through the antenna 1.

In some embodiments, the electronic device may further include an antenna 2 and a mobile communication module 150. The mobile communication module 150 may provide a solution that includes wireless communication such as 2G/3G/4G/5G and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 2, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 2. In some embodiments, at least some functional modules in the mobile communication module 150 may be disposed in the processor 110. In some embodiments, at least some functional modules in the mobile communication module 150 may be disposed in a same component as at least some modules in the processor 110.

The antenna 1 and the antenna 2 are configured to transmit and receive electromagnetic wave signals. Each antenna of the electronic device may be configured to cover one or more communication frequency bands. Different antennas may be further multiplexed to improve antenna utilization. For example, the antenna 2 may be multiplexed as a diversity antenna in a wireless local area network. In some other embodiments, the antennas may be used in combination with a tuning switch.

In some scenarios, the antenna 1 and the wireless communication module 140 of the electronic device are coupled, and the antenna 2 and the mobile communication module 150 are coupled, so that the electronic device can communicate with a network and another device by using a wireless communication technology. The wireless communication technology may include global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

In some embodiments, the electronic device may further include a subscriber identity module (subscriber identification module, SIM) card interface 151, configured to connect to a SIM card. The SIM card may be inserted into the SIM card interface 151 or removed from the SIM card interface 151 to implement contact with and separation from the electronic device. The electronic device may support one or N SIM card interfaces, where N is a positive integer greater than 1.

In some embodiments, the wireless communication module 140 and the mobile communication module 150 may be used as network components in the electronic device.

A wireless communication function of the electronic device may be implemented by using the antenna 1, the antenna 2, the mobile communication module 150, the wireless communication module 140, the modem processor, the baseband processor, and the like. For example, an instant messaging application is installed in the electronic device, and the wireless communication module 140 is used to provide a function of making a network call, for example, a MeeTime call, for a user. For another example, after the electronic device is connected to the SIM card through the SIM card interface 151, the mobile communication module 150 is used to make a call by using a carrier cloud service.

In some embodiments, the electronic device may further include an audio module 160. The audio module 160 includes a speaker, a receiver, a microphone, a headset jack, and the like. The audio module 160 is configured to convert digital audio information into an analog audio signal output, and is also configured to convert an analog audio input into a digital audio signal. The audio module 160 may be further configured to encode and decode audio signals. In some embodiments, the audio module 160 may be disposed in the processor 110, or some functional modules in the audio module 160 are disposed in the processor 110. The electronic device can implement audio functions, for example, answering or making a call, playing music, and recording a voice, by using the audio module, the speaker, the receiver, the microphone, the headset jack, the application processor, and the like.

In some embodiments, in a call process, the electronic device plays audio and/or collects audio data by using the audio module 160, to implement the call. The audio module 160 may be used as an audio component in the electronic device.

In some embodiments, the electronic device may further include a display 170. The electronic device can implement a display function by using the GPU, the display 170, the application processor, and the like. The GPU is a microprocessor for image processing, and is connected to the display 170 and the application processor. The GPU is configured to: perform mathematical and geometric computation, and render an image. The processor 110 may include one or more GPUs that execute program instructions to generate or change display information.

The display 170 is configured to display an image, a video, and the like. The display 170 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini LED, a micro LED, a micro OLED, a quantum dot light-emitting diode (quantum dot light-emitting diode, QLED), or the like. In some embodiments, the electronic device may include one or N displays 170, where N is a positive integer greater than 1.

In some embodiments, the electronic device may further include a camera 180. The electronic device can further implement a shooting function by using the ISP, the camera 180, the video codec, the GPU, the display 170, the application processor, and the like.

The ISP is configured to process data fed back by the camera 180. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm-based optimization on noise, brightness, and complexion of the image. The ISP may further optimize parameters such as exposure and color temperature of a photographing scenario. In some embodiments, the ISP may be disposed in the camera 180.

The camera 180 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In some embodiments, the electronic device may include one or N cameras 180, where N is a positive integer greater than 1.

The video codec is configured to compress or decompress a digital video. The electronic device may support one or more types of video codecs. Therefore, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device, for example, image recognition, facial recognition, voice recognition, and text understanding.

In some embodiments, in a video call process, the electronic device displays a video image by using the display 170, and/or captures a video image of a user by using the camera 180, to implement a real-time video call. The display 170 and the camera 180 may be used as visual components in the electronic device.

In some embodiments, the electronic device may further include a sensor module 190. The sensor module 190 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch component". The touch sensor may be disposed on the display 170, and the touch sensor and the display 170 form a touchscreen, which is also referred to as a "touch screen". The touch sensor is configured to detect a touch operation performed on or near the touch sensor. The touch sensor may transfer the detected touch operation to the application processor for determining a type of a touch event, and may provide a visual output related to the touch operation by using the display 170. In some other embodiments, the touch sensor may alternatively be disposed on a surface of the electronic device at a location different from that of the display 170.

In some embodiments, the sensor module 190 or the touchscreen may be used as a user interaction component in the electronic device.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be coupled to the touch sensor, a charger, a flash, the camera 180, and the like through different I2C bus interfaces. For example, the processor 110 may be coupled to the touch sensor through the I2C interface, so that the processor 110 communicates with the touch sensor through the I2C bus interface to implement a touch function of the electronic device.

The I2S interface may be configured to perform audio communication. In some embodiments, the processor 110 may include a plurality of groups of I2S buses. The processor 110 may be coupled to the audio module 160 through the I2S bus to implement communication between the processor 110 and the audio module 160. In some embodiments, the audio module 160 may transfer an audio signal to the wireless communication module 140 through the I2S interface, to implement a function of answering a call through a Bluetooth headset.

The PCM interface may also be used to perform audio communication, and sample, quantize, and code an analog signal. In some embodiments, the audio module 160 and the wireless communication module 140 may be coupled through the PCM bus interface. In some embodiments, the audio module 160 may also transfer an audio signal to the wireless communication module 140 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 140. For example, the processor 110 communicates with a Bluetooth module in the wireless communication module 140 through the UART interface, to implement a Bluetooth function. In some embodiments, the audio module 160 may transfer an audio signal to the wireless communication module 140 through the UART interface, to implement a function of playing music through a Bluetooth headset.

The MIPI interface may be configured to connect to the processor 110 and a peripheral device such as the display 170 and the camera 180. The MIPI interface includes a camera serial interface (camera serial interface, CSI), a display serial interface (display serial interface, DSI), and the like. In some embodiments, the processor 110 communicates with the camera 180 through the CSI interface to implement a shooting function of the electronic device. The processor 110 communicates with the display 170 through a DSI interface to implement a display function of the electronic device.

The GPIO interface may be configured by using software. The GPIO interface may be configured as a control signal interface or a data signal interface. In some embodiments, the GPIO interface may be configured to connect the processor 110 to the camera 180, the display 170, the wireless communication module 140, the audio module 160, the sensor module 190, and the like. The GPIO interface may alternatively be configured as an I2C interface, an I2S interface, a UART interface, an MIPI interface, or the like.

The USB port is a port that conforms to a USB standard specification, and may be specifically a mini USB port, a micro USB port, a USB type C port, or the like. The USB port may be configured to connect to a charger to charge the electronic device, may be configured to transmit data between the electronic device and a peripheral device, or may be configured to connect to a headset for playing audio through the headset. Alternatively, the interface may be configured to connect to another electronic device, for example, an AR device.

It may be understood that, an interface connection relationship between the modules shown in this embodiment of this application is merely an example for description, and does not constitute a limitation on the structure of the electronic device. In some other embodiments of this application, the electronic device may alternatively use an interface connection manner different from that in the foregoing embodiment, or a combination of a plurality of interface connection manners.

In some embodiments, after connecting to an audio device such as a Bluetooth headset by using a wireless communication technology such as Bluetooth or Wi-Fi, the electronic device can extend a local voice capability to the audio device, send audio data to the audio device, play the audio data by using the audio device, and receive audio data collected by the audio device.

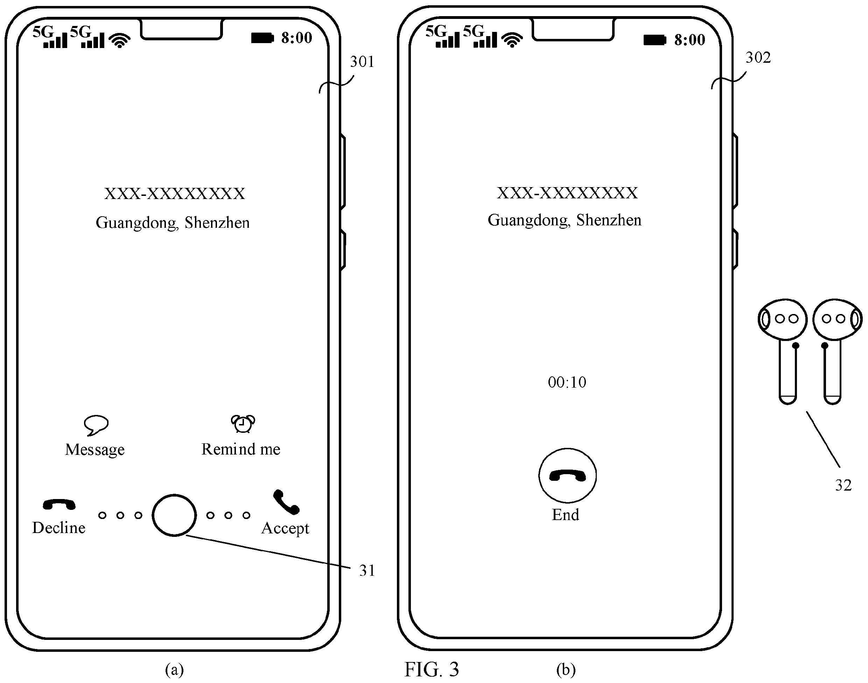

For example, as shown in (a) in FIG. 3, a mobile phone detects that there is an incoming call, and displays an incoming call alert interface 301. In response to an operation of operating, by a user, a control 31 to answer a call, the mobile phone reads an audio device list, selects, according to a preset rule, an audio device used for a call, and displays a call interface 302 shown in (b) in FIG. 3. The audio device list includes a local audio module and a device that is connected to the mobile phone and that may be used to process audio data. The preset rule includes a priority order of audio device selection, and the priority order is usually pre-configured in the mobile phone. When the mobile phone needs to select an audio device, the mobile phone selects, based on the priority order, an audio device with a relatively high priority to process audio data. For example, a descending order of priorities is a Bluetooth headset or a sound box > a wired headset > the local audio module. It is assumed that, in a scenario shown in FIG. 3, a Bluetooth connection has been established between the mobile phone and a Bluetooth headset 32. In this case, in response to the operation of operating, by the user, the control 31 to answer a call, the mobile phone determines to answer the call by using the Bluetooth headset. In the call process, the mobile phone captures a voice of the user by using the Bluetooth headset 32, and plays incoming call audio to the user.

In the foregoing distributed audio scenario, in a process of selecting an audio device, the electronic device performs selection only according to a fixed preset rule, and does not perform selection based on an actual situation of a current scenario. Therefore, determining a selected audio device may not ensure stability of a call process. For example, in the scenario shown in FIG. 3, if Bluetooth connection stability is relatively poor in this case, the mobile phone still selects, according to the preset rule, the Bluetooth headset to answer a call, resulting in relatively poor call quality and affecting use experience of the user.

Further, currently, the electronic device can be applied to a plurality of call scenarios, for example, applied to the foregoing call scenario that is based on a carrier cloud and in which a call application is used. The electronic device can also be applied to a call scenario in which another instant messaging application is used, for example, a voice call scenario or a video call scenario.

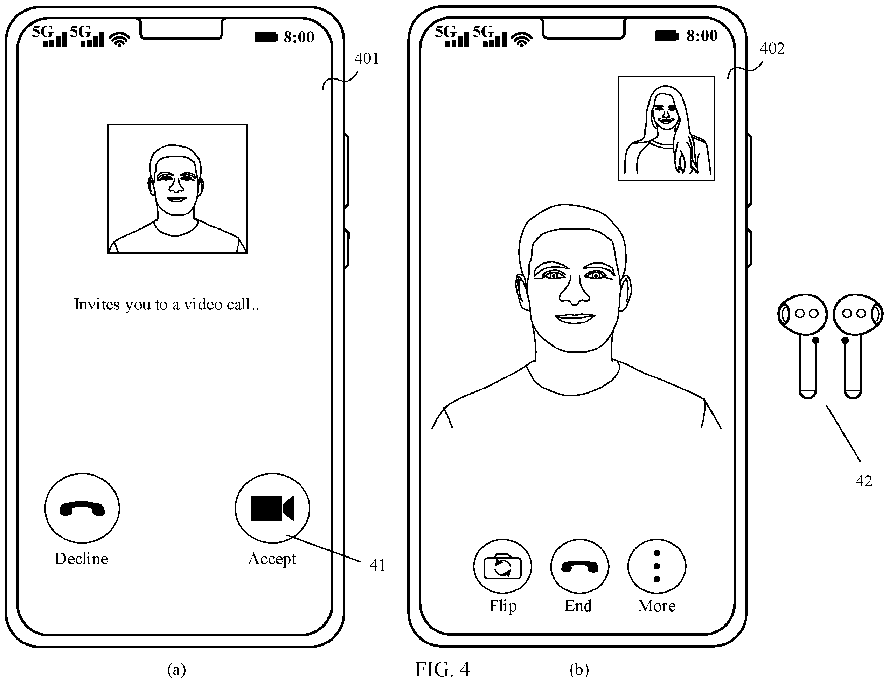

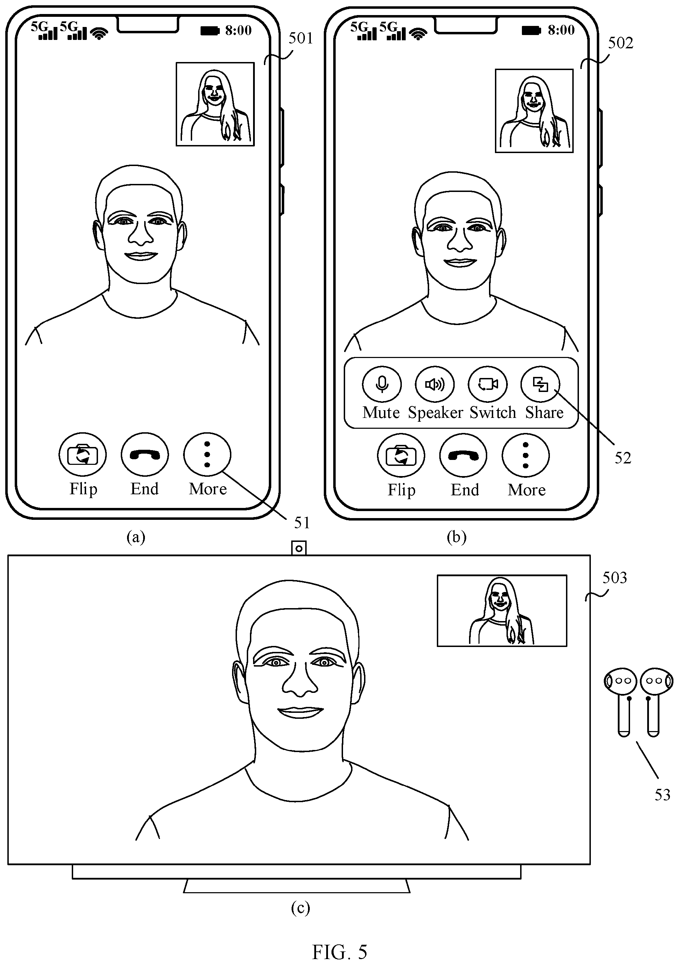

For example, on an interface 401 shown in (a) in FIG. 4, in response to an operation of tapping an answer control 41 by the user, the mobile phone answers a video call, and displays a video call interface 402 shown in (b) in FIG. 4. It is assumed that the mobile phone currently establishes a Bluetooth connection to the Bluetooth headset. Similarly, the mobile phone preferentially sends audio data to the Bluetooth headset. Therefore, in a current scenario, a problem that call quality is affected because an audio device is selected according to the fixed preset rule also occurs. Further, limited by a display area of a display of the mobile phone, a display effect of the video call interface 402 is affected. Therefore, displayed content on the video call interface 402 may be projected to a large-screen device for display by using a wireless projection technology. On an interface 501 shown in (a) in FIG. 5, in response to an operation of tapping a control 51 by the user, the mobile phone displays an interface 502 shown in (b) in FIG. 5, to provide more operation options for the user. In response to an operation of tapping a screen sharing control 52 by the user, the mobile phone projects displayed content on the interface 502 to a television for display, and the mobile phone and the television form a distributed system. As shown in (c) in FIG. 5, the television displays an interface 503, zooms in and displays the content on the video call interface, to provide a better display effect for the user.

However, in the wireless projection technology, only the displayed content can be projected for display, but audio data and the displayed content cannot be sent at a same time. In a scenario shown in (c) in FIG. 5, when the mobile phone projects the video call interface to the television for display, an audio module that is being currently used by the mobile phone further needs to be used for a call. If the mobile phone is connected to a Bluetooth headset 53, the Bluetooth headset 53 needs to be used to process audio data, and the television is used to display a video image. However, the television cannot be used for playing and collecting the audio data while displaying the video image. This affects use experience of the user. Further, as shown in (c) in FIG. 5, after the wireless projection technology is applied, an entire display of the television can only be used to display a projected image, and cannot perform another operation.

In some other embodiments, the electronic device may alternatively perform a call process based on a device virtualization technology by using another electronic device. For example, a television that does not support insertion of a SIM card dials a carrier number by using a number dialing function of a SIM card of a mobile phone. For another example, if a mobile phone is installed with a voice over IP (voice over internet protocol, VoIP) application, a VoIP call may be made by using a VoIP call capability of a home optical modem.

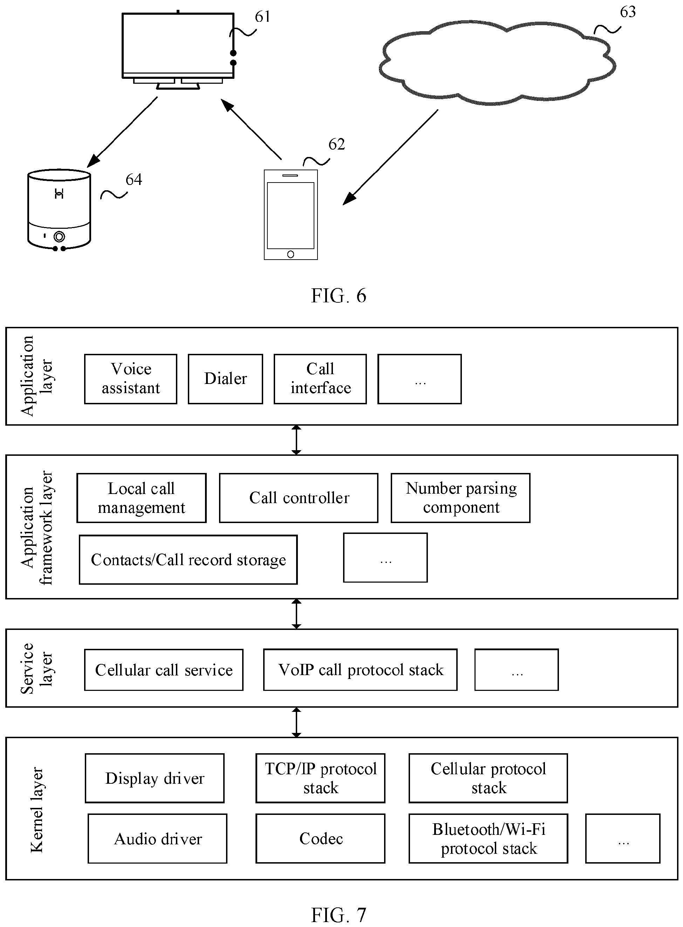

For example, as shown in FIG. 6, a television 61 does not support insertion of a SIM card, but a device virtualization technology is applied to make a call by using a carrier cloud 63 and a carrier number dialing function of a mobile phone 62. In a call process, after audio data is sent by a peer electronic device in the call to the mobile phone 62, the audio data is forwarded by the mobile phone 62 to the television 61 for play. It is assumed that the television 61 currently establishes a Bluetooth connection to an acoustic device 64 by using a wireless communication technology and the television 61 may play audio data by using the acoustic device 64. In a current scenario, the television 61 establishes a connection to the mobile phone 62 and establishes a connection to the acoustic device 64. However, no direct connection relationship is established between the mobile phone 62 and the acoustic device 64. Therefore, the mobile phone 62 and the acoustic device 64 cannot sense each other. Therefore, after receiving the audio data, the mobile phone 62 cannot directly send the audio data to the acoustic device 64, but can send the audio data only to the television 61 first, and then the television 61 sends the audio data to the acoustic device 64 for play. This causes unnecessary data forwarding and affects transmission efficiency.

It can be learned that, in the distributed call scenarios shown in FIG. 3 to FIG. 6, distributed call devices participating in a call process are scheduled based on a device granularity. Therefore, a problem that call quality is affected due to a non-optimal device combination and a problem that transmission efficiency is affected due to cross-device data transmission may occur.

Therefore, an embodiment of this application proposes a call method, so that in a call process, distributed call devices participating in the call process can be divided based on a component granularity. In the call process, a corresponding component is invoked to ensure call quality and reduce cross-device data transmission. This provides better use experience for a user.

In some embodiments, a distributed call device is divided into components based on functions implemented in a call process, and the components obtained after division are grouped to determine components of a same type as a group of components. Specifically, in a component division process, an electronic device needs to follow the following principle: First, a functional module that performs a single service and has a clear input and output is determined as a component. For example, a number parsing component can process an input voice command and output number information. Second, a component in the distributed call device can not only perform data exchange with another component in the distributed call device, but also perform data exchange with a component in another distributed call device through an external interface. Exchanged data includes, for example, call data and/or control signaling.

For example, as shown in FIG. 7, a software system of the electronic device may use a layered architecture, an event-driven architecture, a microkernel architecture, a microservice-based architecture, or a cloud architecture. In embodiments of this application, an Android system with a layered architecture is used as an example for describing a software structure of the electronic device. FIG. 7 is a block diagram of a software structure of an electronic device according to an embodiment of this application. In a layered architecture, software is divided into several layers, and each layer has a clear role and task. The layers communicate with each other through a software interface. In some embodiments, an Android system is divided into four layers from top to bottom: an application layer, an application framework layer, a service layer, and a kernel layer.

The application layer includes applications such as a voice assistant, a dialer, and a call interface. The application framework layer provides an application programming interface (application programming interface, API) and a programming framework for an application at the application layer. The application framework layer includes some predefined functions. As shown in FIG. 7, the application framework layer may include local call management, a call controller, a number parsing component, contacts/call record storage, and the like. The service layer includes a cellular call service and a VoIP call protocol stack. The kernel layer is a layer between hardware and software. The kernel layer includes a display driver, an audio driver, a transmission control protocol (transmission control protocol, TCP) protocol stack or an IP protocol stack, a cellular protocol stack, a codec, a Bluetooth/Wi-Fi protocol stack, and the like.

Modules at the foregoing layers may be divided into different components based on functions implemented in a call process. The following describes component division with reference to the block diagram of the software structure of the electronic device shown in FIG. 7. In a call process, components may be classified into, for example, an input component, a number parsing component, a user interaction component, and a network component.

The input component is configured to: receive an input of a user before a call is started, and input data to another component in the call process. For example, the input component can receive a voice command or a text command of the user. Optionally, in a software implementation process of the call process, the input component may include only an output interface, and does not include an input interface. For example, in the call process, the input component sends the voice command to the number parsing component for processing, with no need to receive data sent by another component. For example, as shown in FIG. 7, the input component includes, for example, the voice assistant and the dialer located at the application layer, and is configured to send, to a next component, received call information input by the user. For example, the dialer sends received user dialing information to the next component.

The number parsing component is configured to: process data input by the input component, and output number information. Optionally, the input data received by the number parsing component is number information. If the input data is a specific to-be-dialed number, the number parsing component directly outputs the received number information without processing the input data. Optionally, if the input data received by the number parsing component is voice data, the number parsing component needs to parse the voice data, convert the voice data into text information, perform semantic analysis on the text information, and output number information. Alternatively, the number parsing component obtains a user name after performing semantic analysis, then searches a phone book for corresponding number information by using the user name, and outputs the determined number information. For example, as shown in FIG. 7, the number parsing component includes, for example, the number parsing component located at the application framework layer.

The network component is configured to: receive the number information output by the number parsing component, generate outgoing call signaling based on the number information and a protocol specification, and perform dialing. For example, if the number information is a carrier number (that is, a common mobile phone number) and the network component is a baseband processor, the network component sends outgoing call signaling to another electronic device through a carrier network according to a call protocol. Alternatively, if the number information is number information in an instant messaging application and the network component is a call module in the instant messaging application, the network component directly sends outgoing call signaling to another electronic device through a wireless communication network. Correspondingly, the network component may further receive and process received incoming call signaling. Further, after establishing a call connection to a peer electronic device, the network component may be further configured to transmit audio data and/or video data to the peer electronic device. For example, as shown in FIG. 7, the network component includes, for example, a cellular call service and a VoIP call protocol stack located at the service layer.

The user interaction component is configured to: in the call process, receive input data from the user and/or output data to the user. Optionally, user components may be divided into an auditory component, a visual component, and an interaction component based on a manner of interaction between a component and the user. For example, the auditory component may also be described as an audio component or a voice component, and includes an audio module such as a speaker, an earpiece, and a microphone. The visual component may also be described as a video component or an image component, including a display, a camera, and the like. The interaction component includes a physical keyboard or a soft keyboard, a control in an application, an electronic device key, a touch sensor, and the like. The auditory component can exchange a voice with the user, input audio data, and output a voice that can be perceived by the user. The visual component can exchange image data with the user, input video data, and output an image that can be perceived by the user. The interaction component may also be directly described as a control component or a tactile component, and is configured to receive a control command input by the user. For example, the user inputs a hang-up command by tapping a control displayed on a display. For example, as shown in FIG. 7, the user interaction component includes, for example, the call interface located at the application layer. For example, in a call process, a touch operation of the user is detected on the call interface, and a corresponding action is performed.

It should be noted that, the components included in the distributed call device may be the foregoing software components, or may be hardware components. For example, a physical keyboard is connected to an electronic device by using a cable or through a wireless connection, and a software agent is configured in the electronic device to convert an input of the user on the physical keyboard into a command. In this case, the physical keyboard cannot be separately divided into components. However, if the physical keyboard can directly convert an input of the user into an explicit command and send the command to another component by using a cable or through a wireless connection, the physical keyboard can be separately divided into components. In other words, after component division is performed, it needs to be ensured that there are a clear input and output in a process of interacting with another component.

It should be noted that, in a call process, a data receiving capability of the input component is optional, but the input component needs to have a data sending capability. The number parsing component, the network component, and the user interaction component need to have both a data receiving capability and a data sending capability.

It may be understood that the foregoing component division manner is merely an example for description, and may also include another division manner. This is not specifically limited in embodiments of this application.

The following uses the foregoing component division manner as an example to describe the call method provided in embodiments of this application.

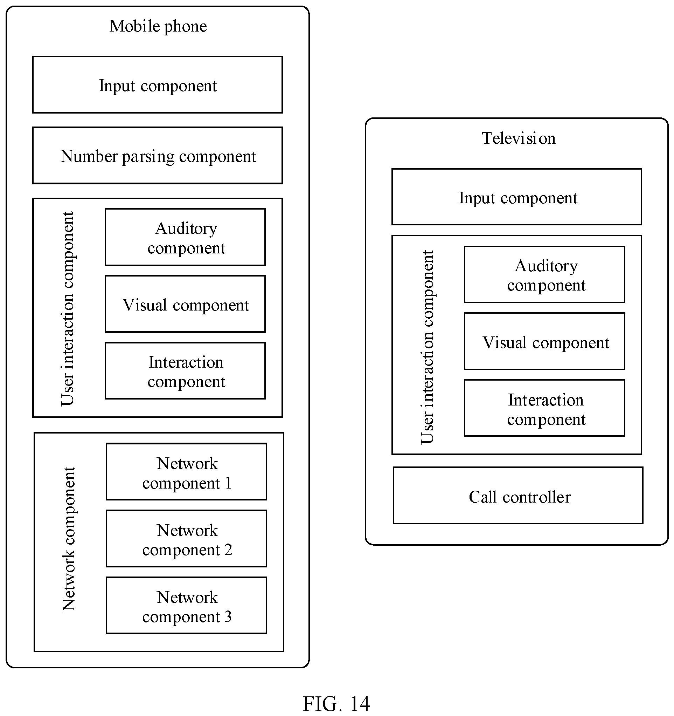

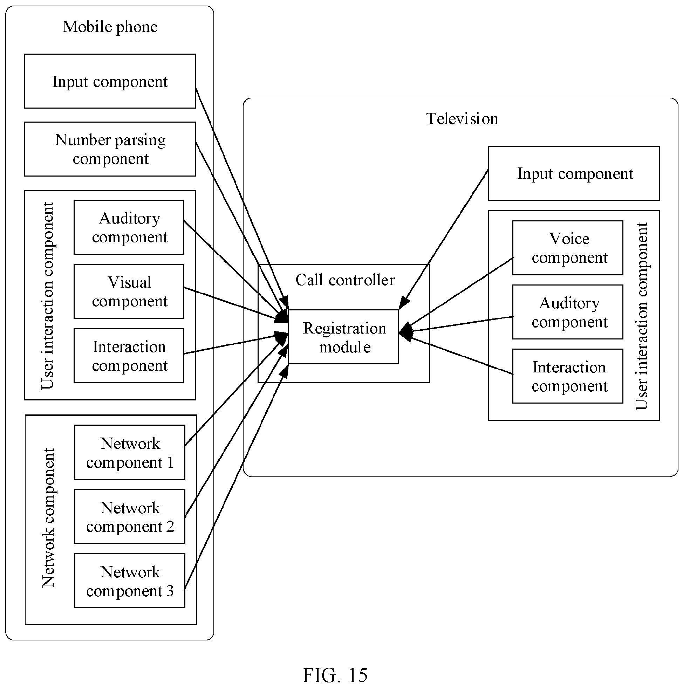

In some embodiments, before participating in a call process, a distributed call device needs to perform division and grouping on components included in the distributed call device, and report a component grouping status to a call controller, so that the call controller invokes an optimal component combination in the call process to perform the call process. For example, as shown in FIG. 14, a mobile phone and a television respectively divide, into components, functional modules that may be used by the mobile phone and the television to perform a call process. As shown in FIG. 15, a mobile phone and a television respectively register components obtained through division of the mobile phone and the television with a call controller located in the television. For related content of scenarios shown in FIG. 14 and FIG. 15, refer to the following descriptions. Details are not described herein.

The call controller may also be described as a controller, a call control module, a central controller, or the like, and is configured to manage a distributed call process. A process of reporting a component grouping status to the call controller may also be described as a registration process. Each distributed call device registers a component included in the distributed call device with the call controller, to complete a registration process. The registration process is an automatic registration process. After detecting an electronic device including the call controller, the electronic device may automatically complete a registration process. For example, as shown in FIG. 7, the call controller may be located at the application framework layer.

For example, in the distributed call system shown in FIG. 1, the first electronic device and the second electronic device need to perform component division, and report component division results to the call controller in the first electronic device. As listed in the following Table 1, registration information of an audio component is listed. An input format of the audio component is used to describe an encoding mode, a sampling rate, a bit rate, and a quantity of sound channels that are corresponding to the audio component. For example, the encoding mode is an MP4 encoding mode, the corresponding bit rate is 1411.2 Kbps, and there are dual sound channels. An encoding format is pulse code modulation (pulse code modulation, PCM) encoding mode, the corresponding bit rate is 380 Kbps, and there is a single channel.

**Table 1**

| Name (name) | Audio_68647749422A1 |
|---|---|
| Component number (device ID) | dev_44478254B2 |
| Component type (type) | Audio (Audio) |
| Component capability (capability) | Audio data input and/or audio data output |
| Component description (description) | Audio component |
| Input interface (input interface) | Audio stream transmission mode: Pipe; |
| | Interface address: 192.168.1.5:9901 |
| Input format (input format) | MP4: 128 K, 1411.2 Kbps, dual channel |
| | PCM: 44 K, 380 Kbps, single channel |
| Output interface (output interface) | Audio stream transmission mode: Pipe |
| Output format (output format) | PCM: 128 K, dual channel |

In some embodiments, if the electronic device is offline or a component is offline, a deregistration procedure needs to be performed. For example, each component in an offline electronic device or an offline component sends an offline notification to the call controller; and the call controller deletes registration information of the offline component or indicates that the component is offline. This avoids a problem that a call exception occurs when an offline component is scheduled in a call process. For example, a scenario in which an electronic device is offline includes: The electronic device is powered off, and all components in the electronic device lose capabilities. For example, a scenario in which a component is offline includes: An instant messaging application logs out, and a SIM card is disconnected from a network.

In some embodiments, a call controller may be configured in each of one or more electronic devices in a distributed call system. However, if there are a plurality of call controllers in the distributed call system, the plurality of call controllers do not work simultaneously to avoid an implementation error in a call process. In other words, in a distributed call scenario, a call controller is deployed only in one of distributed call devices.

Specifically, a deployment principle of a call controller includes one or more of the following principles:
(1) An electronic device having a relatively large quantity of components in the distributed call system is determined as a first electronic device, and a call controller is deployed therein, to reduce cross-device data transmission. For example, an electronic device in which a call controller is configured notifies a quantity of components in the electronic device in a broadcast mode; and through information exchange, a call controller inside an electronic device having a largest quantity of components starts to work, and receives registration of each component.
(2) An electronic device that keeps in an online state in a call process is determined as a first electronic device, and a call controller is deployed therein, to ensure continuity of a call service.
(3) An electronic device whose processing capability can meet a component scheduling and control requirement in a call process is determined as a first electronic device, and a call controller is deployed therein, to ensure that the call controller can correctly process a call task.

For example, if a mobile phone is an electronic device having a largest quantity of components in a distributed call system, and it can be ensured that the mobile phone keeps online in a call process and has a sufficient processor capability, a call controller is deployed in the mobile phone. For another example, if a Bluetooth headset includes only an audio component, that is, there are a relatively small quantity of components, no call controller needs to be deployed in the Bluetooth headset.

In some embodiments, after receiving registration of components in distributed call devices, a call controller selects, based on functions of the components, components that need to be applied in a call process, and an implementation order, an optimal component combination to cooperatively process a call task.

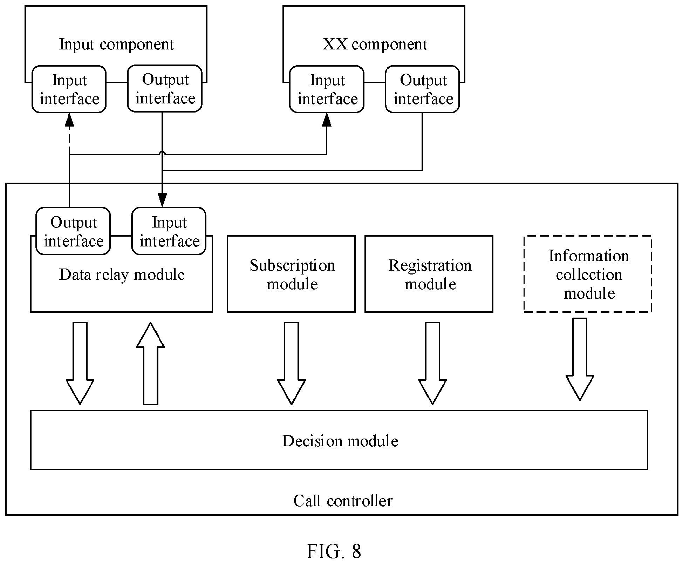

For example, as shown in FIG. 8, a call controller includes, for example, a registration module, a decision module, and a data relay module. The registration module is configured to receive registration of each component. The decision module is configured to: determine, from registered components based on data input by an input component, an optimal component combination used to perform a call task. The data relay module is configured to: connect to an input interface or an output interface of each component, and complete data relaying.

Data relaying includes interface address relaying and/or call data relaying. In the optimal component combination, if two components that are logically connected can directly complete call data transmission by relying on a capability of an electronic device in which the two components are located, the data relay module only needs to perform relaying on interface addresses of the two components, to assist the two components in establishing a direct connection channel. In other words, a device-to-device (device to device, D2D) communication channel is established between the two components. For example, it is assumed that a network component and a user interaction component are two components that are logically connected to each other sequentially, and a manner in which the network component outputs an audio stream is pipe. A manner in which the user interaction component inputs an audio stream is also pipe, and an interface address is 192.168.1.5:8080. In this case, the data relay component only needs to send the interface address of the user interaction component to the network component, and the network component can send, based on the received interface address, received audio data to the user interaction component in a pipe manner for play.

In the optimal component combination, if formats of data transmitted between two components that are logically connected are different, and/or data receiving and sending manners of the two components are different, and/or a direct connection channel cannot be established between the two components, the data relay module needs to receive data output by a current component and send the data to a next component, to complete data relaying. For example, assuming that a network component and a user interaction component are two components that are logically connected to each other sequentially, the network component supports connection establishment performed through a Wi-Fi network, and the user interaction component supports only connection establishment performed through Bluetooth, a direct connection channel cannot be currently established between the network component and the user interaction component. In this case, data relaying needs to be performed by using the data relay module, to perform a call process.

The following describes how each module in a call controller schedules a component to perform a call task.

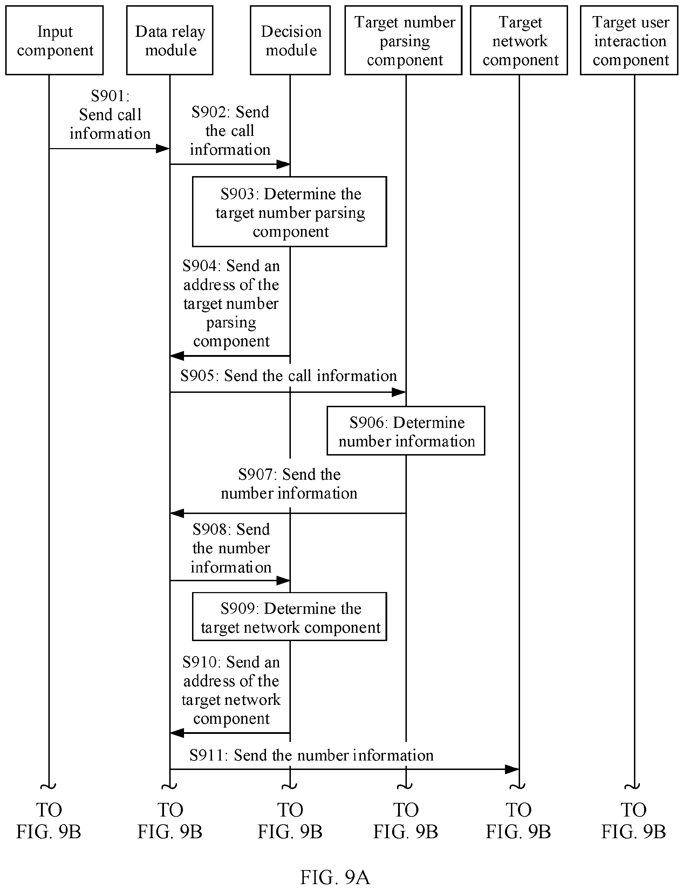

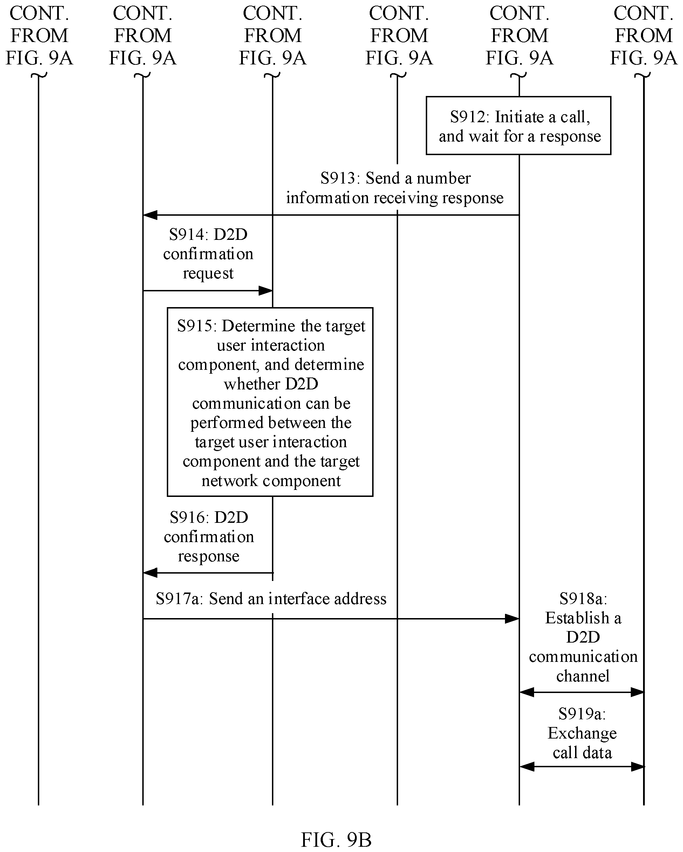

For example, as shown in FIG. 9A and FIG. 9B, each component has completed a registration procedure, and a call process in which a call controller makes a call includes the following steps.
S901: An input component sends call information to a data relay module.
S902: The data relay module sends the call information to a decision module.

In some embodiments, before the call process is started, the input component first receives the call information input by a user. Then, the input component sends the call information to the data relay module, and the data relay module forwards the call information to the decision module. The call information includes, for example, a dialing number, a call record tapped in a phone book, and a user name tapped in the phone book.
S903: The decision module determines a target number parsing component.
S904: The decision module sends an address of the target number parsing component to the data relay module.

In some embodiments, in step S903 and step S904, the decision module determines an optimal target number parsing component from registered number parsing components based on the call information, and sends an address of the determined target number parsing component to the data relay module, so that the data relay module sends the call information to the target number parsing module.
S905: The data relay module sends the call information to the target number parsing module.
S906: The target number parsing module determines number information.
S907: The target number parsing module sends the number information to the data relay module.

In some embodiments, in step S905 to step S907, after receiving the call information forwarded by the data relay module, the target number parsing module parses the call information to obtain the number information, that is, converts the call information into a number that can be dialed; and sends the number information to the data relay module.
S908: The data relay module sends the number information to the decision module.
S909: The decision module determines a target network component.
S910: The decision module sends an address of the target network component to the data relay module.

In some embodiments, in step S908 to step S910, after receiving the number information forwarded by the data relay module, the decision module determines an optimal target network component from registered network components based on the number information, and sends an address of the target network component to the data relay module, so that the data relay module forwards the number information to the target network component.
S911: The data relay module sends the number information to the target network component.
S912: The target network component initiates a call, and waits for a response.
S913: The target network component sends a number information receiving response to the data relay module.

In some embodiments, in step S911 to step S913, after receiving the number information forwarded by the data relay module, the target network component initiates a call to a peer electronic device by using the number information, waits for the peer electronic device to answer the call, and sends a number information receiving response signal to the data relay module to notify the data relay module that the data relay module may start to perform a D2D communication confirmation procedure.
S914: The data relay module sends a D2D confirmation request to the decision module.
S915: The decision module determines a target user interaction component, and determines whether D2D communication can be performed between the target user interaction component and the target network component.
S916: The decision module sends a D2D confirmation response to the data relay module.

In some embodiments, in step S914 to step S916, after receiving the number information receiving response signal, the data relay module determines that the target network component has initiated the call and that the data relay module may start to perform the D2D communication confirmation procedure; and sends the D2D confirmation request to the decision module. The decision module first determines an optimal target user interaction component from registered user interaction components, and then determines whether D2D communication can be performed between the target user interaction component and the target network component.

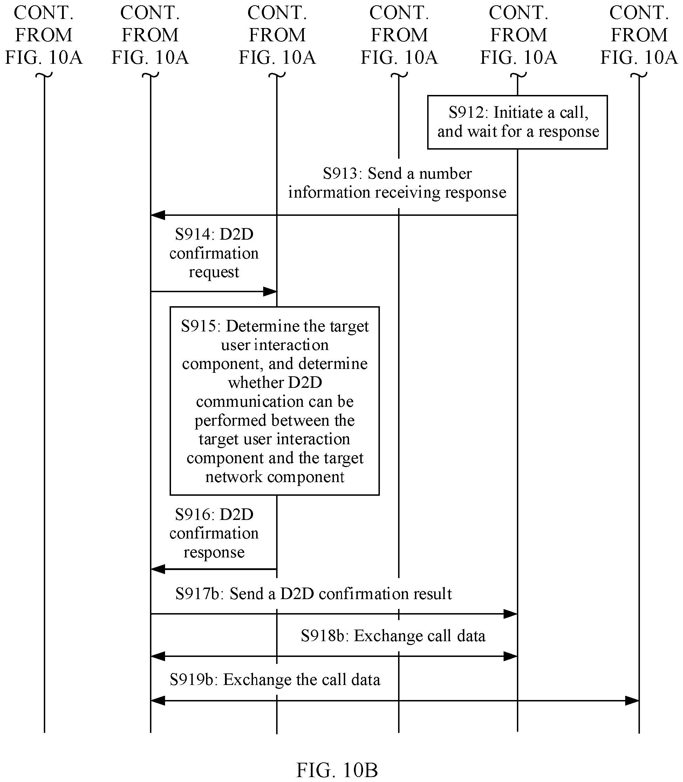

If D2D communication can be performed between the target user interaction component and the target network component, step S917a to step S919a shown in FIG. 9B are performed. If D2D communication cannot be performed between the target user interaction component and the target network component, step S917b to step S919b shown in FIG. 10B are performed.
S917a: The data relay module sends an interface address to the target network component.
S918a: Establish a D2D communication channel between the target network component and the target user interaction component.
S919a: Exchange call data between the target network component and the target user interaction component.

In some embodiments, as described above, if a condition for performing D2D communication between the target user interaction component and the target network component is met, the D2D communication channel is established between the target user interaction component and the target network component. In a subsequent call process, call data can be directly transmitted between the target user interaction component and the target network component. This reduces cross-device transmission of the call data. The call data includes, for example, audio data, video data, and a control command.
S917b: The data relay module sends a D2D confirmation result to the target network component.
S918b: Exchange call data between the target network component and the data relay module.
S919b: Exchange the call data between the target user interaction component and the data relay module.

In some embodiments, as described above, if the condition for performing D2D communication between the target user interaction component and the target network component is not met, in a subsequent call process, relay needs to be performed on call data between the target user interaction component and the target network component by using the data relay module, and direct communication cannot be performed between the target user interaction component and the target network component.

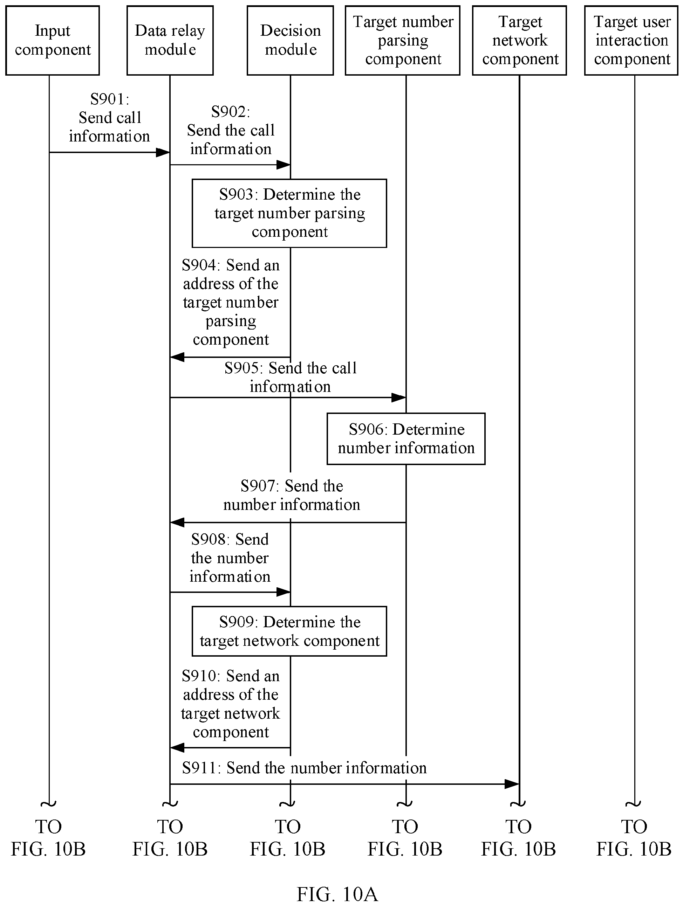

In the call procedures shown in FIG. 9A, FIG. 9B, FIG. 10A, and FIG. 10B, the audio data includes uplink audio data and downlink audio data. The uplink audio data is audio data that is collected by the target user interaction component and that is sent to the target network component. The downlink audio data is audio data that is sent by a peer electronic device in a call and that is received by the target network component, and the target network component sends the downlink audio data to the target user interaction component. The video data includes uplink video data and downlink video data. The uplink video data is video data that is collected by the target user interaction component and that is sent to the target network component. The downlink video data is video data that is sent by the peer electronic device in the call and that is received by the target network component, and the target network component sends the downlink video data to the target user interaction component.

In the call procedures shown in FIG. 9A, FIG. 9B, FIG. 10A, and FIG. 10B, the decision module needs to determine an optimal number parsing component, an optimal network component, and an optimal user interaction component. The following describes how the decision module determines an optimal component in each type of components from registered components.

In some embodiments, based on functions implemented by different types of components in a call process and factors that affect working of the components, corresponding indicators and indicator weights are pre-configured for the different types of components to evaluate each of components of a same type, to obtain an optimal component therein. For example, the call controller performs scoring on each of components of a same type based on indicators and corresponding weights, sorts obtained scores, and uses a component with a highest score as an optimal component. The call controller sequentially determines optimal components in various types of components in a call process implementation order to obtain a group of optimal components.

For example, the following describes evaluation indicators of various types of components and corresponding weights thereof. The call controller can determine, based on registration information of each component, a specific status that is of the component and that is corresponding to each indicator, to perform scoring.

The following Table 2 lists indicators used to evaluate a number parsing component and corresponding weights thereof. The number parsing component should have a number parsing capability and can obtain a final number used for dialing. For example, as shown in the following Table 2, a weight corresponding to a data matching indicator is 60%. To be specific, the call controller preferentially selects a number parsing component including a user-specified number or name. Further, a weight corresponding to a data set size indicator is 20%. To be specific, if each of a plurality of number parsing components is a number parsing component including the user-specified number or name, a number parsing component is determined based on a data set size. A data set includes, for example, a contact list. For example, a number parsing component corresponding to a maximum data set is selected. The number parsing component has better number parsing capability. However, if a current dialing scenario is a scenario in which an unknown number is dialed, in other words, none of the number parsing components include the user-specified number or name, the call controller selects a number parsing component including a contact list or a call record, and the number parsing component determines whether the number is a valid number, to determine whether to perform a subsequent call process.

**Table 2**

| Indicator | Description | Weight |
|---|---|---|
| Data matching | Whether a data set includes a specified number or name? | 60% |
| Data set size | Total data set size of a contact list and a call record | 20% |
| Contact list | Whether the contact list is supported? | 10% |
| Call record | Whether the call record is supported? | 10% |

It should be noted that, in a process in which the number parsing component registers with the call controller, information such as a data set size, whether a contact list is supported, and whether a call record is supported can be registered. However, a data set does not need to be registered, in other words, the data set does not need to be sent to the number parsing component. When determining that data matches each other, the call controller may process received call information and send processed information to each number parsing component. The number parsing component performs a simple operation to determine whether data matches each other, and sends a data matching result to the call controller. In this way, the call controller can perform scoring on each number parsing component based on the data matching result. For example, the number parsing component determines the data matching result by using a hash (Hash) algorithm.

In some scenarios, the number parsing component may obtain one number or a group of numbers after parsing input data. For example, if one number is obtained, the decision module directly determines a target network component based on the following indicators corresponding to a network component. For another example, if a group of numbers are obtained, the decision module determines an optimal number based on a preset condition, and then determines a corresponding target network component. The preset condition is a recently dialed number, a quantity of dialing times, or the like. For example, if the number parsing component outputs a number 1 and a number 2, and the decision module determines that a user dialed the number 1 one hour ago, the decision module determines the number 1 as an optimal number this time.

The following Table 3 lists indicators used to evaluate a network component and corresponding weights. A server refers to an electronic device that carries a network component.

**Table 3**

| Indicator | Description | Weight |
|---|---|---|
| Signal quality | The signal quality is indicated by using a parameter for evaluating the signal quality, and the parameter includes, for example, a received signal strength indicator (received signal strength indication, RSSI) or reference signal received power (reference signal receiving power, RSRP). | 25% |
| Network bandwidth | A higher network bandwidth indicates that more resources can be used in a call process. Usually, a descending order of network bandwidths is 5G>4G>3G>2G. | 20% |
| Audio quality | The audio quality is used to indicate an audio processing capability of the network component, and is indicated by using the following parameters: encoding, a sampling rate, a bit rate, and a quantity of sound channels. Usually, the foregoing parameters and a corresponding server jointly determine the audio quality. | 20% |
| Video quality | The video quality is used to indicate a video processing capability of the network component, and is indicated by using the following parameters: encoding, a sampling rate, a bit rate, and a quantity of sound channels. Usually, the foregoing parameters and a corresponding server jointly determine the video quality. | 20% |
| Tariff | A tariff of a call service is usually determined by a carrier and is charged by time or traffic. | 15% |

It should be noted that selection of the network component needs to be based on an output result of the number parsing component. For example, a number output by the number parsing component may be a carrier number, or may be a network number corresponding to an instant messaging application, and different number types may be corresponding to different network components. In addition, if data input to the number parsing component has specified a required network component type, the network component type and corresponding number information are output, and the decision module determines an optimal network component of this type. Further, if the data input to the number parsing component has specified a required network component, and output number information includes only one number, the decision module does not need to work, and directly determines the corresponding network component. For example, if a user inputs a number in an instant messaging application, the user directly uses a network component in the instant messaging application to perform dialing. In other words, when there are a plurality of numbers and/or network components, the decision module needs to perform selection.

In addition, in the indicators in the foregoing Table 3, some information is information that can be provided during network component registration, and some information dynamically changes based on a network status. Therefore, optionally, as shown in FIG. 8, the call controller may further include an information collection module, configured to obtain network status information in real time, or configured to obtain network status information when a network component needs to be selected. The decision module obtains the network status information output by the information collection module, to determine an optimal network component.

The following Table 4 to Table 6 list indicators used to evaluate a user interaction component and corresponding weights. The user interaction component described above includes an auditory component, a visual component, and an interaction component. Table 4 lists indicators used to evaluate the auditory component and corresponding weights. Table 5 lists indicators used to evaluate the visual component and corresponding weights. Table 6 lists indicators used to evaluate the interaction component and corresponding weights.

**Table 4**

| Indicator | Description | Weight |
|---|---|---|
| Connection quality | The connection quality is used to indicate wireless connection quality, for example, Bluetooth connection quality, Wi-Fi connection quality, and ZigBee connection quality. The wireless connection quality is represented by an RSSI. | 30% |
| Network bandwidth | The network bandwidth is used to indicate a bandwidth for connection between the auditory component and the network component. If relay is required during data transmission, the network bandwidth is jointly determined by the following three parties: the auditory component, a network component, and a data relay module. Usually, a corresponding network bandwidth is determined by a party with a weakest processing capability. | 30% |
| Audio quality | The audio quality is used to indicate an audio processing capability of the auditory component, and is indicated by using the following parameters: encoding, a sampling rate, a bit rate, and a quantity of sound channels. | 40% |

It should be noted that, in the foregoing Table 4, a current status parameter needs to be obtained by using the information collection module, to evaluate the connection quality and the network bandwidth. The audio quality is evaluated by using registration information of the auditory component.

**Table 5**

| Indicator | Description | Weight |
|---|---|---|
| Connection quality | The connection quality is used to indicate wireless connection quality, for example, Bluetooth connection quality, Wi-Fi connection quality, and ZigBee connection quality. The wireless connection quality is represented by an RSSI. | 30% |
| Network bandwidth | The network bandwidth is used to indicate a bandwidth for connection between the visual component and the network component. If relay is required during data transmission, the network bandwidth is jointly determined by the following three parties: the visual component, the network component, and the data relay module. Usually, a corresponding network bandwidth is determined by a party with a weakest processing capability. | 30% |
| Video quality | The video quality is used to indicate a video processing capability of the visual component, and is indicated by using the following parameters: encoding, a sampling rate, and a bit rate. | 30% |
| Screen parameter | The screen parameter is used to indicate visual information that can be perceived by human eyes of a user, and is indicated by using the following parameters: a screen size, a resolution, and dots per inch (dots per inch, DPI) information. | 40% |
| Camera parameter | The camera parameter is used to indicate quality of a natively captured video, and is indicated by using the following parameters: a camera resolution, a frame rate, and bit rate information. | 40% |

It should be noted that, in the foregoing Table 5, a current status parameter needs to be obtained by using the information collection module, to evaluate the connection quality and the network bandwidth. The video quality, the screen parameter, and the camera parameter are evaluated by using registration information of the visual component.

**Table 6**

| Indicator | Description | Weight |
|---|---|---|
| Basic function | The basic function is used to indicate a basic function that can be implemented by the user interaction component. For example, the function includes hanging up, mute, volume adjustment, or call information display. | 50% |
| Extended function | The extended function is used to indicate an extended function that can be implemented by the user interaction component. For example, the function includes call recording, multi-party call, and an auxiliary dialer. | 20% |
| Interaction mode | The interaction mode is used to indicate an interaction mode that can be implemented by the user interaction component, for example, touch, voice, or remote control. | 30% |

It should be noted that, in the foregoing Table 6, the indicators for evaluating the interaction component are related to a hardware capability or a software specification of the interaction component, and are usually fixed parameters. Therefore, the parameters are evaluated by using registration information of the interaction component. Further, the interaction component usually transmits only a small amount of control data and text information, and has a low requirement on connection quality, a network bandwidth, and the like. Therefore, in a process of selecting an interaction component, the call controller should select, based on an interaction function required by the user in a current call scenario, an interaction component that can provide more functions for the user.

In some embodiments, a subscription relationship may be established between different types of components to form a component combination. Establishing a subscription relationship between components is establishing a static association relationship between the components. After selecting a component from the component combination, the call controller directly determines, based on the subscription relationship, to select another component from the component combination, with no need to perform a scoring process of a component of a corresponding component type. Alternatively, after scoring is performed on components based on the foregoing indicators, weights for selecting the components having the subscription relationship are increased based on the subscription relationship, and scoring is performed again. In other words, a finally selected component is determined after scoring is performed twice based on the indicators and the subscription relationship. The components having the subscription relationship may be located in a same electronic device, or may be located in different electronic devices. For details about establishment of a component subscription relationship, refer to the following description.

For example, in a schematic diagram of a structure of the call controller shown in FIG. 8, the call controller includes a subscription module. In a process in which the decision module performs component selection, the decision module not only needs to receive component registration information sent by a registration module, but also needs to receive a component subscription relationship sent by the subscription module. The decision module performs scoring on components based on the component registration information and the component subscription relationship, to determine an optimal component combination.

The following Table 7 lists a subscription relationship. A subscription relationship is established between an audio component and the following three components, including a video component, a network component 1, and a network component 2. For example, the network component 1 is a component located in a same electronic device as the audio component. The network component 2 is a component located in a different electronic device from the audio component.

Further, if there are a plurality of components of a same type, a priority order is determined in an arrangement order, and a component ranked higher has a higher priority. For example, a priority of the network component 1 is higher than that of the network component 2. When selecting a network component, the call controller preferentially selects the network component 1.

**Table 7**

| Name (name) | Audio component: Audio_68647749422A1 |
|---|---|
| Component subscription list (subscription list) | Video component: Video_55149422B1 |
| | Network component 1: net_8868844V1 |
| | Network component 2: net_5684724@dev_88478254BV |

In some embodiments, if there is a conflict between a component selected by the call controller based on the foregoing indicators and a component selected by the call controller based on a subscription relationship, the components between which there is a conflict are provided, in a manner such as interface display or by using a voice prompt, for the user to perform selection, and a component selected by the user is used as a component finally applied in a call process.

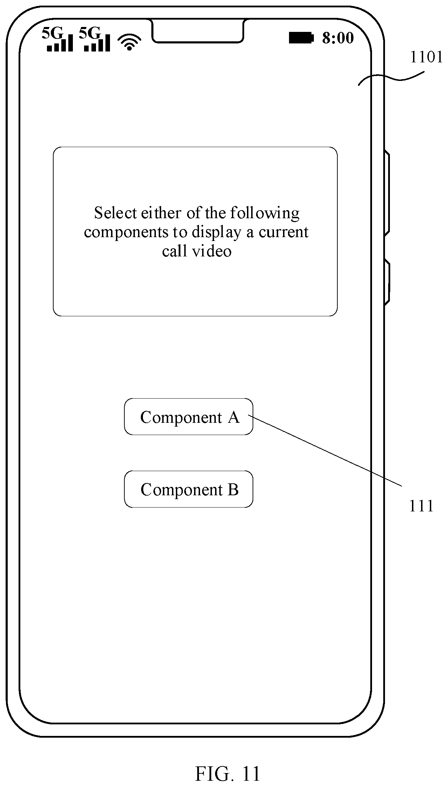

For example, it is assumed that in a process of selecting a component for displaying a call video, a conflict occurs during component selection. On an interface 1101 shown in FIG. 11, after performing scoring based on the foregoing indicators, the call controller determines that an optimal component is a component A. A component determined based on a subscription relationship is a component B. After detecting an operation of tapping a control 111 by the user, an electronic device determines that the user chooses to use the component A to display a video. In this case, the call controller schedules the component A in a call process to participate in the call process.

In some embodiments, in a process of registering a component with the call controller, the electronic device may choose to register a subscription relationship. For example, in the following cases, an electronic device may establish a subscription relationship between components.

Case 1: A subscription relationship is established between components in a same electronic device, to provide better use experience for a user.

For example, if a plurality of components in a user interaction component are located in a same electronic device, a subscription relationship is established between these components. This reduces a quantity of electronic devices with which the user needs to interact in a call process, facilitating a user operation. For example, a user interaction component in a television includes an audio component and a video component. In this case, the television may establish a subscription relationship between the audio component and the video component in the television, and register the subscription relationship when registering the subscription relationship with a call controller. In this way, in a process of making a call by using the television, one device may be used to play audio and display a video, to provide better use experience for the user.

For another example, a subscription relationship is established between an input component and a user interaction component in a same electronic device. It is assumed that an input component A and a user interaction component B are in a same electronic device and there is a subscription relationship therebetween. In this case, the user interaction component B is preferentially selected for a call initiated by the input component A. For example, a smart speaker receives a voice and initiates a call; and after the call is established, the smart speaker itself is selected as an auditory component. This improves a call implementation effect and provides better use experience for the user.

Case 2: After a subscription relationship is established between components, cross-device data transmission can be reduced, and data transmission efficiency can be improved.

For example, in the scenario shown in FIG. 6, the acoustic device 64 is used as an audio component, and a subscription relationship is established between the acoustic device 64 and a network component in the mobile phone 62. In this case, in a call process, audio data can be directly transmitted between the network component in the mobile phone 62 and the acoustic device 64 as the audio component, without requiring the television 61 to perform data relaying. This improves data transmission efficiency.

Specifically, in the foregoing scenario in which the audio data is directly transmitted between the mobile phone and the acoustic device, a D2D communication channel needs to be established between the mobile phone and the acoustic device, to transmit the audio data. Specifically, the foregoing scenario of subscription between components in different devices can be implemented based on the following steps. It is assumed that a call controller is located in the television.
Step 1: The mobile phone discovers the nearby acoustic device through Bluetooth scanning, and determines that a Bluetooth transmission channel is normal.
Step 2: The mobile phone sends the subscription relationship between the network component in the mobile phone and the acoustic device to the call controller. The acoustic device is an audio component. The subscription message includes D2D communication channel information, for example, a Bluetooth socket (socket) name.
Step 3: The call controller records the subscription relationship and stores the socket name.
Step 4: The call controller selects the network component in the mobile phone, and selects the acoustic device (that is, an audio component) that has a subscription relationship with the network component, to establish a call.
Step 5: Before a distributed call system needs to transmit audio data, the call controller determines, based on the subscription relationship, whether a current D2D communication channel can be used to transmit the audio data. If the current D2D communication channel can be used to transmit the audio data, the network component is instructed to switch a transmission channel of the audio data from a transmission channel pointing to the call controller to a Bluetooth socket of the acoustic device, to establish the D2D communication channel to transmit the audio data. In other words, step S914 to step S919a shown in FIG. 9B are performed.

In this way, according to the method described in step 1 to step 5, the two components implement communication handshake by using communication capabilities (for example, Bluetooth connection capabilities) of electronic devices in which the two components are located, to establish the D2D communication channel. This reduces cross-device data transmission.

It may be understood that the foregoing cases in which a subscription relationship is established between components are merely examples for description, and there may be another case in which a subscription relationship needs to be established. For example, if a specific component accepts only data input to a fixed component, a subscription relationship needs to be established to ensure a fixed connection relationship.

In addition, if a component needs to perform a deregistration procedure, an associated subscription relationship also needs to be unsubscribed. For example, each component in an offline electronic device or an offline component sends an offline notification to the call controller; and the call controller deletes registration information of the offline component or indicates that the component is offline, and deletes a subscription relationship associated with the offline component or indicates that the subscription relationship has become invalid.

Therefore, according to the call method provided in embodiments of this application, division, grouping, and registration can be performed on a distributed call device based on components. In addition, the call controller schedules registered components based on registration information and a subscription relationship, and selects a most suitable component combination in a current call scenario to perform a call task. Compared with a scenario in which a call task is performed based on a granularity of an electronic device, in this method, cross-device data transmission can be effectively reduced, and call efficiency can be improved. In addition, use experience of a user can be improved.

The following uses two scenarios as examples to describe the call method provided in this embodiment of this application.

### Scenario 1: Multi-party conference call scenario

The multi-party conference scenario refers to: There is at least one user who may make a voice in a conference room, and a conference terminal is configured in the conference room and is configured to connect to a remote electronic device, for example, request a call from the remote electronic device by using an application configured in the conference terminal. The conference terminal can receive and play audio data sent by the remote electronic device, and can capture a voice of a user in the conference room, generate audio data, and send the audio data to the remote electronic device. The remote electronic device is an electronic device located outside the conference room.

In some embodiments, a call controller is deployed in the conference terminal, and a component in the conference terminal registers with the call controller. For example, an auditory component in the conference terminal registers with the call controller. In addition, after a user enters the conference room with a mobile phone, a component in the mobile phone automatically registers with the call controller. For example, an input component, a number parsing component, a network component, an auditory component, and an interaction component in the mobile phone register with the call controller. In addition, there is a subscription relationship between the input component and the auditory component in the mobile phone.

It should be noted that, usually, when initiating a call by using an electronic device, a user also performs another operation on the electronic device, for example, voice exchange. Therefore, the subscription relationship needs to be established between the input component and the auditory component in the mobile phone.

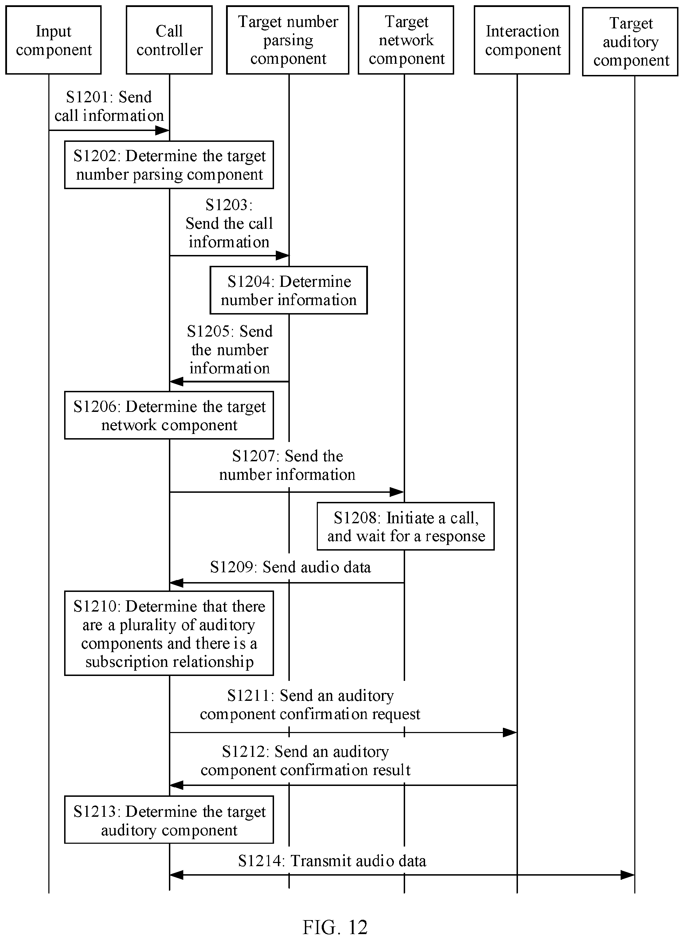

For example, as shown in FIG. 12, in the current scenario, a call method includes the following steps.

S1201: An input component sends call information to the call controller.

In some embodiments, in the current scenario, an application corresponding to an application that is in the conference terminal and that is used for a call may not be installed in the remote electronic device. In addition, limited by performance of the conference terminal, the conference terminal cannot make an external call, or a communication system in the conference terminal is incompatible with a communication system in the remote electronic device. In this case, the user cannot directly use the conference terminal to make a call to the remote electronic device.

For example, it is assumed that an application installed in the conference terminal is an application A, an application that is used for conference communication and that is installed in a remote electronic device 1 is an application B, and a remote electronic device 2 is not installed with an application used for conference communication and supports dialing only a carrier number. In this case, the conference terminal cannot directly establish communication connections with the remote electronic device 1 and the remote electronic device 2 to provide a multi-party online conference service.

Based on this, in the call method provided in this embodiment of this application, the call controller in the conference terminal can determine, based on registered network components in mobile phones, a network component that supports a corresponding function, to make a call to provide a multi-party online conference service for a plurality of communication systems.

In step S1201, a mobile phone is used as an example for description. The input component is an input component that is in a mobile phone and that supports initiating a call request to a corresponding remote electronic device. Specifically, when determining that a number to be dialed currently cannot be dialed by using the conference terminal, the user determines a mobile phone having a dialing capability, and performs dialing by using the mobile phone. After receiving call information, an input component in the mobile phone sends the call information to the call controller.

S 1202: The call controller determines a target number parsing component.

In some embodiments, after receiving the call information, the call controller in the conference terminal determines the target number parsing component based on the foregoing evaluation indicators of a number parsing component and corresponding weights thereof. For example, the target number parsing component is located in the same mobile phone as the input component.
S 1203: The call controller sends the call information to the target number parsing component.
S1204: The target number parsing component determines number information.
S1205: The target number parsing component sends the number information to the call controller.
S1206: The call controller determines a target network component.
S1207: The call controller sends the number information to the target network component.
S1208: The target network component initiates a call, and waits for a response.
S1209: The target network component sends audio data to the call controller.

Optionally, for content in step S 1203 to step S1209, refer to the related content in step S904 to step S913. Details are not described herein again.

S1210: The call controller determines that there are a plurality of auditory components and there is a subscription relationship.

In some embodiments, the call controller detects that registered components include a plurality of auditory components, for example, an auditory component in the conference terminal and an auditory component in at least one mobile phone. Usually, in the multi-party conference scenario, the auditory component in the conference terminal processes audio data, so that the auditory component collects sound data in all directions and can ensure that all users can clearly hear sound. However, there is a subscription relationship between the input component that initiates the current call in step S1201 and an auditory component in the mobile phone in which the input component is located. Therefore, there is a conflict between the auditory component that is in the conference terminal and that is selected by the call controller based on indicators and the auditory component corresponding to the subscription relationship, and the call controller cannot determine an optimal auditory component.
S1211: The call controller sends an auditory component confirmation request to an interaction component.
S1212: The interaction component sends an auditory component confirmation result to the call controller.
S1213: The call controller determines a target auditory component.
S1214: Transmit audio data between the call controller and the target auditory component.

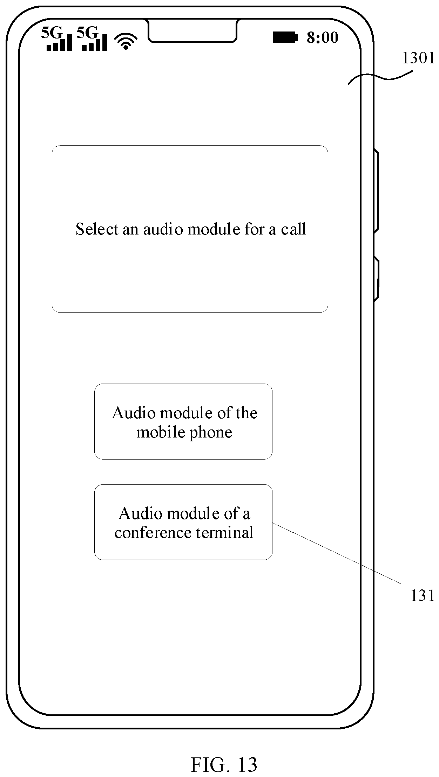

In some embodiments, in step S1211 to step S1214, because the call controller cannot determine an optimal auditory component, the user needs to select the optimal auditory component. The call controller sends the auditory component confirmation request to the interaction component to receive a user choice. The interaction component and the input component in step S1201 are located in the same mobile phone, facilitating a user operation. For example, the interaction component is, for example, a visual component. After receiving the confirmation request, the mobile phone displays an interface 1301 shown in FIG. 13, detects an operation of tapping a control 131 by the user, and determines that the user chooses to use an audio module in the conference terminal to process audio data, that is, the auditory component selected by the user is the audio module in the conference terminal. The interaction component sends the auditory component confirmation result to the call controller; and the call controller determines that the target auditory component is an auditory component that is in the conference terminal and that is selected based on indicators. Then, components that are determined to be used start to cooperatively perform a call task.

It should be noted that, in the foregoing multi-party conference scenario, because both the call controller and the target auditory component are located in the conference terminal, a problem of cross-device audio data transmission does not occur regardless of whether a D2D communication channel is established between the target network component and the target auditory component. Therefore, in the current scenario, whether a D2D communication channel is established between the target network component and the target auditory component is not specifically limited in embodiments of this application.

In this way, the foregoing step S1201 to step S1214 are repeated, so that the conference terminal can communicate, by using a network component capability of one or more mobile phones, with remote electronic devices supporting different communication systems. This improves office experience of the user in the multi-party conference scenario.

Scenario 2: Scenario in which a call is made by using an electronic device that does not have a call capability.

It is assumed that a user needs to make a call in a process of watching TV in a living room but a mobile phone is not near the user but in another room in this case. According to the call method provided in embodiments of this application, a television that does not have a call capability can be used for a call.

In the current scenario, electronic devices used include a mobile phone and a television. After the mobile phone and the television are connected to a local area network, for example, a Wi-Fi network, the mobile phone and the television can detect each other's existence. In addition, a call controller may be deployed in the mobile phone, or may be deployed in the television. In a call process, it needs to be ensured that only one call controller is in a working state. Therefore, in the current scenario, the call method is described by using an example in which the call controller is deployed in the television.

For example, as shown in FIG. 14, the mobile phone includes an input component, a number parsing component, a user interaction component, and network components. The user interaction component includes an auditory component, a visual component, and an interaction component. The mobile phone supports a plurality of types of network communication, and the network components include a network component 1, a network component 2, and a network component 3. For example, the network component 1 supports making a call through an instant messaging application, the network component 2 supports making a call through a mobile network, and the network component 3 supports making a call through a telecommunication network. The television includes an input component, a user interaction component, and the call controller. The user interaction component also includes an auditory component, a visual component, and an interaction component.

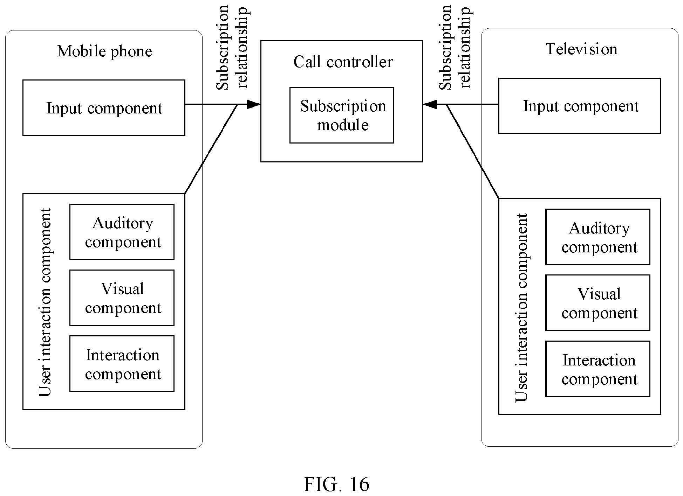

As shown in FIG. 15, after the mobile phone and the television are connected to the local area network, the foregoing components register with a registration module in the call controller. In addition, there is a subscription relationship between the input component in the mobile phone and each user interaction component in the mobile phone. There is a subscription relationship between the input component in the television and each user interaction component in the television. As shown in FIG. 16, components having a subscription relationship also need to send the subscription relationship to a subscription module in the call controller, and the subscription module stores the subscription relationship.

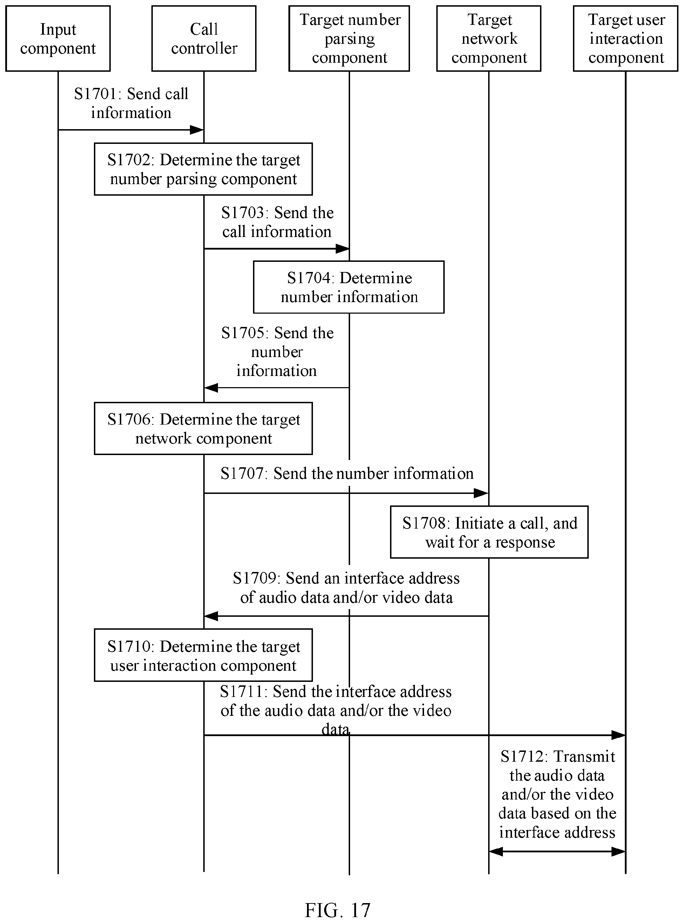

For example, as shown in FIG. 17, in the current scenario, a call method includes the following steps.

S1701: The input component sends call information to the call controller.

In some embodiments, the input component in the television receives a voice command "call Dad" from a user. After receiving the voice command, the input component parses the voice command, determines that call information is "Dad", and sends the call information to the call controller.

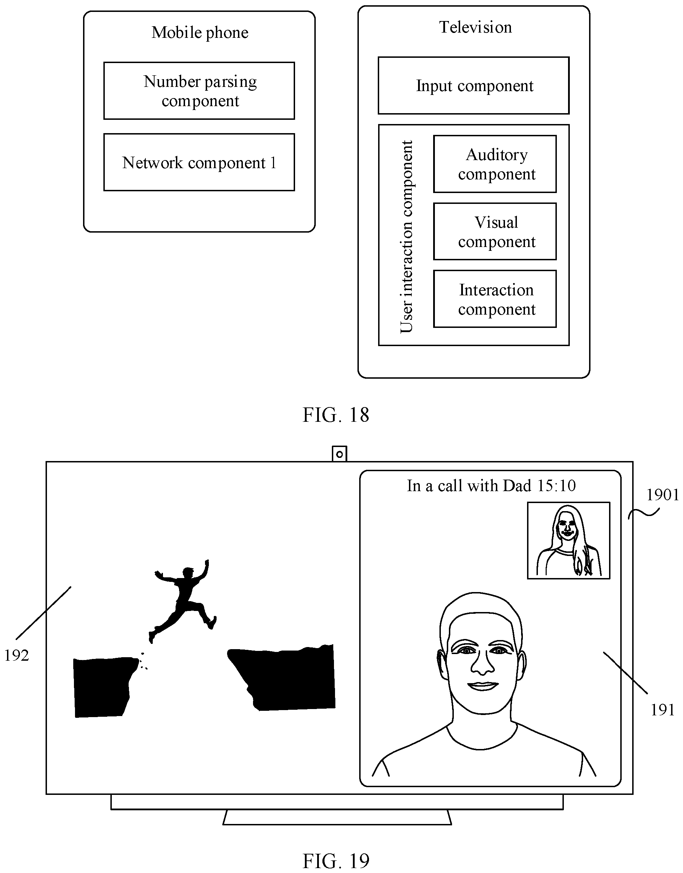

For example, as shown in FIG. 18, the input component in the television participates in the current call procedure.
S1702: The call controller determines a target number parsing component.
S1703: The call controller sends the call information to the target number parsing component.

In some embodiments, after receiving the call information, the call controller determines a number parsing component in the mobile phone as the target number parsing component, and sends the call information to the target number parsing component.

For example, as shown in FIG. 18, the call controller determines that the number parsing component in the mobile phone participates in the current call procedure.
S1704: The target number parsing component determines number information.
S1705: The target number parsing component sends the number information to the call controller.

In some embodiments, after receiving the call information, the target number parsing component in the mobile phone converts voice data in the call information into text information, and then performs semantic analysis on the text information to determine that "Dad" is corresponding to two numbers. One number is a number corresponding to an instant messaging application, and the other number is a carrier number. The target number parsing component sends the two determined numbers to the call controller.

S1706: The call controller determines a target network component.

In some embodiments, the call controller receives the two numbers, and a decision module located in the call controller determines that a to-be-dialed number is the number corresponding to the instant messaging application. In this case, the decision module determines that the target network component is the network component 1 that is in the mobile phone and that supports making a call through an instant messaging application.

For example, as shown in FIG. 18, the call controller determines that the network component 1 in the mobile phone participates in the current call procedure.

S1707: The call controller sends the number information to the target network component.

In some embodiments, a data relay module in the call controller sends the determined number information to the target network component.

S1708: The target network component initiates a call, and waits for a response.

In some embodiments, after receiving the number information sent by the call controller, the target network component in the mobile phone performs dialing based on the number information.

S1709: The target network component sends an interface address of audio data and/or video data to the call controller.

For example, it is assumed that an interface address of an audio input is 192.168.1.20:8000, an interface address of an audio output is 192.168.1.20:8001, an interface address of a video input is 192.168.1.20:8000, and an interface address of a video output is 192.168.1.20:8001.
S1710: The call controller determines a target user interaction component.
S1711: The call controller sends the interface address of the audio data and/or the video data to the target user interaction component.
S1712: Transmit the audio data and/or the video data between the target user interaction component and the target network component based on the interface address.

In some embodiments, in step S1709 to step S1712, the call controller determines that there is a subscription relationship between the input component and the user interaction component in the television. Therefore, the call controller determines the user interaction component in the television as the target user interaction component.

In addition, the call controller determines that a format of audio data and/or video data transmitted by the target user interaction component matches a format of audio data and/or video data transmitted by the target network component in the mobile phone, and determines that a D2D communication channel can be established between the target user interaction component and the target network component based on the interface address. Therefore, the D2D communication channel is established; and in a subsequent call process, the audio data and/or the video data are/is directly transmitted between the target user interaction component and the target network component.

For example, as shown in FIG. 18, the call controller determines that the user interaction component in the television participates in the current call procedure. The auditory component in the television plays and captures a sound, and the visual component in the television displays and captures a video image.

Further, in the current scenario, the user can make a call by using the television that does not have a call capability. In addition, different from a wireless projection technology in a conventional technology, the television displays a video image in a call process without occupying an entire display of the television. A remaining unoccupied area of the display may be used to provide another function for the user.

For example, on an interface 1901 shown in FIG. 19, the display of the television includes a display area 191 and a display area 192. The display area 191 is used to display a video image. The display area 192 is used to display another image and/or receive another operation of the user. For example, as shown on the interface 1901, the display area 191 displays a video image in a current call, and the display area 192 displays a game image.

It may be understood that, to implement the foregoing functions, the foregoing electronic device includes a corresponding hardware structure and/or software module for implementing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, another division manner may be used.

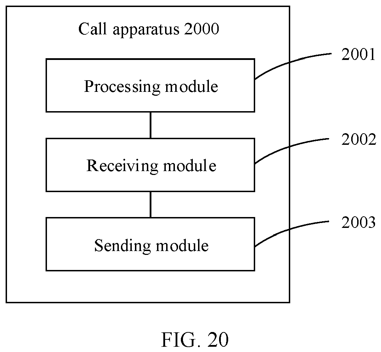

In a possible design, FIG. 20 is a schematic diagram of a structure of a call apparatus according to an embodiment of this application. As shown in FIG. 20, the call apparatus 2000 includes a processing module 2001, a receiving module 2002, and a sending module 2003. The call apparatus 2000 may be configured to implement functions of the device in the foregoing method embodiments. The call apparatus 2000 may be a device, or may be a functional unit or a chip in the device, or an apparatus used in cooperation with a communication device.

Optionally, the processing module 2001 is configured to support the call apparatus 2000 in performing one or more of step S903, step S909, and step S915 in the foregoing embodiment; and/or the processing module 2001 is further configured to support the call apparatus 2000 in performing another processing step performed by the call controller in embodiments of this application.

Optionally, the receiving module 2002 is configured to support the call apparatus 2000 in performing one or more of step S901, step S907, step S913, step S918b, and step S919b in the foregoing embodiment; and/or the receiving module 2002 is further configured to support the call apparatus 2000 in performing another receiving step performed by the call controller in embodiments of this application.

Optionally, the sending module 2003 is configured to support the call apparatus 2000 in performing one or more of step S905, step S911, step S917b, step S918b, and step S919b in the foregoing embodiment; and/or the sending module 2003 is further configured to support the call apparatus 2000 in performing another sending step performed by the call controller in embodiments of this application.

Optionally, the call apparatus 2000 shown in FIG. 20 may further include a storage module (not shown in FIG. 20). The storage module stores a program or instructions. When the processing module 2001, the receiving module 2002, and the sending module 2003 execute the program or the instructions, the call apparatus 2000 shown in FIG. 20 is enabled to perform the call method provided in embodiments of this application.

The receiving module and the sending module may be collectively referred to as a transceiver module, may be implemented by a transceiver or a transceiver-related circuit component, and may be a transceiver or a transceiver unit.

The processing module 2001 may be a processor or a controller. The processor may implement or execute various example logical blocks, modules, and circuits described with reference to content disclosed in embodiments of this application. Alternatively, the processor may be a combination of processors for implementing a computing function, for example, a combination of one or more microprocessors, or a combination of a DSP and a microprocessor.

Operations and/or functions of the units in the call apparatus 2000 shown in FIG. 20 are respectively intended to implement corresponding procedures of the call methods provided in the foregoing method embodiments. For brevity, details are not described herein again. For technical effects of the call apparatus 2000 shown in FIG. 20, refer to the technical effects of the call methods provided in the foregoing method embodiments. Details are not described herein again.

An embodiment of this application further provides a chip system, including a processor, where the processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps in the methods disclosed with reference to embodiments of this application may be directly performed and completed by a hardware processor, or may be performed and completed by using a combination of hardware in the processor and a software module.

An embodiment of this application further provides a storage medium, configured to store instructions used by the foregoing call apparatus.

An embodiment of this application further provides a computer-readable storage medium. The computer-readable storage medium stores computer instructions. When the computer instructions are run on a server, the server is enabled to perform the related method steps to implement the call methods in the foregoing embodiments.

An embodiment of this application further provides a computer program product. When the computer program product is run on a computer, the computer is enabled to perform the related method steps to implement the call methods in the foregoing embodiments.

In addition, an embodiment of this application further provides an apparatus. The apparatus may be specifically a component or a module, and the apparatus may include one or more processors and a memory that are connected to each other. The memory is configured to store a computer program, and one or more computer programs include instructions. When the instructions are executed by the one or more processors, the apparatus is enabled to perform the call methods in the foregoing method embodiments.

The apparatus, the computer-readable storage medium, the computer program product, or the chip provided in the embodiments of this application is configured to perform the corresponding method provided above. Therefore, for beneficial effects that can be achieved by the apparatus, the computer-readable storage medium, the computer program product, or the chip, refer to beneficial effects in the corresponding method provided above. Details are not described herein again.

Methods or algorithm steps described with reference to content disclosed in embodiments of this application may be implemented by using hardware, or may be implemented by a processor executing software instructions. The software instruction may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The foregoing descriptions about implementations allow a person skilled in the art to understand that, for the purpose of convenient and brief description, division into the foregoing functional modules is taken as an example for illustration. In actual application, the foregoing functions can be allocated to different modules and implemented according to a requirement, that is, an inner structure of an apparatus is divided into different functional modules to implement all or a part of the functions described above. For a specific working process of the foregoing system, apparatus, and unit, refer to a corresponding process in the foregoing method embodiments. Details are not described herein again.

In the several embodiments provided in this application, it should be understood that the disclosed methods may be implemented in other manners. For example, the described apparatus embodiment is merely an example. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electrical, mechanical, or other forms.

The units described as separate parts may or may not be physically separate, and parts displayed as units may or may not be physical units, and may be located in one position, or may be distributed on a plurality of network units. All or a part of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps in the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A call method, wherein the method is applied to a first device and comprises:
establishing a communication connection to at least one second device;
receiving capability registration information of the at least one second device;
receiving a first call service request;
selecting, based on capability information of the first device and the capability registration information of the at least one second device, a first target device configured to process the first call service request, wherein the first target device is the first device or one of the at least one second device;
sending the first call service request to the first target device; and
receiving first feedback information obtained after the first target device processes the first call service request.

2. The method according to claim 1, wherein the selecting, based on capability information of the first device and the capability registration information of the at least one second device, a first target device configured to process the first call service request comprises:
grouping a capability of the first device and a capability of the second device by a function category based on the capability information of the first device and the capability registration information of the at least one second device, and setting an evaluation indicator corresponding to each group and a weight corresponding to each evaluation indicator; and
selecting a first group used to process the first call service request, performing scoring on a capability of the first device and/or a capability of the second device in the first group by using an evaluation indicator and a weight corresponding to the evaluation indicator, and selecting the first target device, wherein a score of a capability of the first target device in the first group is a highest score.

3. The method according to claim 1 or 2, wherein after the receiving first feedback information obtained after the first target device processes the first call service request, the method further comprises:
determining a second call service request based on the first feedback information, wherein the second call service request is different from the first call service request;
selecting, based on the capability information of the first device and the capability registration information of the at least one second device, a second target device configured to process the second call service request, wherein the second target device is the first device or one of the at least one second device;
sending the second call service request to the second target device; and
receiving second feedback information obtained after the second target device processes the second call service request.

4. The method according to claim 3, wherein the first target device and the second target device are different second devices, and the first target device is configured to directly receive call data sent by the second target device.

5. The method according to claim 1, wherein after the receiving a first call service request, the method further comprises:
selecting, based on the first call service request, the first target device associated with the first call service request.

6. The method according to any one of claims 1 to 5, wherein a device form of the first device is different from that of at least one of the at least one second device.

7. The method according to any one of claims 1 to 6, wherein there are one or more pieces of capability information of the first device, and there are one or more pieces of capability registration information of one second device.

8. The method according to any one of claims 1 to 7, wherein the first call service request is any one of a number parsing request, a number dialing request, a video play and/or capture request, and an audio play and/or capture request.

9. The method according to any one of claims 1 to 8, wherein the first target device is the first device, and the sending the first call service request to the first target device, and receiving first feedback information obtained after the first target device processes the first call service request comprises:
sending, by a first module in the first target device, the first call service request to a second module in the first target device; and
receiving, by the first module, the first feedback information obtained after the second module processes the first call service request.

10. The method according to any one of claims 1 to 8, wherein the first target device is a target second device in the at least one second device, and the sending the first call service request to the first target device, and receiving first feedback information obtained after the first target device processes the first call service request comprises:
sending, by the first device, the first call service request to the target second device; and
receiving, by the first device, the first feedback information obtained after the target second device processes the first call service request.

11. An electronic device, comprising a processor and a memory, wherein the memory is coupled to the processor; the memory is configured to store computer program code; the computer program code comprises computer instructions; and when the processor reads the computer instructions from the memory, the electronic device is enabled to perform the following operations:
establishing a communication connection to at least one second device;
receiving capability registration information of the at least one second device;
receiving a first call service request;
selecting, based on capability information of the electronic device and the capability registration information of the at least one second device, a first target device configured to process the first call service request, wherein the first target device is the electronic device or one of the at least one second device;
sending the first call service request to the first target device; and
receiving first feedback information obtained after the first target device processes the first call service request.

12. The electronic device according to claim 11, wherein the selecting, based on capability information of the electronic device and the capability registration information of the at least one second device, a first target device configured to process the first call service request comprises:
grouping a capability of the electronic device and a capability of the second device by a function category based on the capability information of the electronic device and the capability registration information of the at least one second device, and setting an evaluation indicator corresponding to each group and a weight corresponding to each evaluation indicator; and
selecting a first group used to process the first call service request, performing scoring on a capability of the electronic device and/or a capability of the second device in the first group by using an evaluation indicator and a weight corresponding to the evaluation indicator, and selecting the first target device, wherein a score of a capability of the first target device in the first group is a highest score.

13. The electronic device according to claim 11 or 12, wherein when the processor reads the computer instructions from the memory, the electronic device is enabled to further perform the following operations:
determining a second call service request based on the first feedback information, wherein the second call service request is different from the first call service request;
selecting, based on capability information of the electronic device and the capability registration information of the at least one second device, a second target device configured to process the second call service request, wherein the second target device is the electronic device or one of the at least one second device;
sending the second call service request to the second target device; and
receiving second feedback information obtained after the second target device processes the second call service request.

14. The electronic device according to claim 13, wherein the first target device and the second target device are different second devices, and the first target device is configured to directly receive call data sent by the second target device.

15. The electronic device according to claim 11, wherein when the processor reads the computer instructions from the memory, the electronic device is enabled to further perform the following operation:
selecting, based on the first call service request, the first target device associated with the first call service request.

16. The electronic device according to any one of claims 11 to 15, wherein a device form of the electronic device is different from that of at least one of the at least one second device.

17. The electronic device according to any one of claims 11 to 16, wherein there are one or more pieces of capability information of the electronic device, and there are one or more pieces of capability registration information of one second device.

18. The electronic device according to any one of claims 11 to 17, wherein the first call service request is any one of a number parsing request, a number dialing request, a video play and/or capture request, and an audio play and/or capture request.

19. The electronic device according to any one of claims 11 to 18, wherein the first target device is the electronic device, and the sending the first call service request to the first target device, and receiving first feedback information obtained after the first target device processes the first call service request comprises:
sending, by a first module in the first target device, the first call service request to a second module in the first target device; and
receiving, by the first module, the first feedback information obtained after the second module processes the first call service request.

20. The electronic device according to any one of claims 11 to 18, wherein the first target device is a target second device in the at least one second device, and the sending the first call service request to the first target device, and receiving first feedback information obtained after the first target device processes the first call service request comprises:
sending the first call service request to the target second device; and
receiving the first feedback information obtained after the target second device processes the first call service request.

21. A computer-readable storage medium, comprising a program or instructions, wherein when the program or the instructions are executed, the call method according to any one of claims 1 to 10 is implemented.

22. A computer program product comprising instructions, wherein when the computer program product runs on an electronic device, the electronic device is enabled to perform the call method according to any one of claims 1 to 10.
